# EUROPEAN PATENT APPLICATION

(11) **EP 4 668 446 A1**
(43) Date of publication of application: **24.12.2025**
(21) Application number: 23950476.4
(22) Date of filing: 24.11.2023
(51) Int. Cl.: H01M 50/30, H01M 10/0525, H01M 50/249, H01M 50/204

(54) **BATTERY CELL, BATTERY, AND ELECTRIC DEVICE**

(30) Priority: 01.09.2023 CN 202311119994
(71) Applicant: Contemporary Amperex Technology Co., Limited, Ningde, Fujian 352100 (CN)
(72) Inventor: KE, Haibo, Ningde, Fujian 352100 (CN); YANG, Rui, Ningde, Fujian 352100 (CN); LI, Quankun, Ningde, Fujian 352100 (CN); HUANG, Shoujun, Ningde, Fujian 352100 (CN); WANG, Peng, Ningde, Fujian 352100 (CN); JIN, Haizu, Ningde, Fujian 352100 (CN); ZHANG, Xiaoping, Ningde, Fujian 352100 (CN)
(74) Representative: Gong, Jinping
(86) International application number: PCT/CN2023/134091
(87) International publication number: WO 2025/043906

(57) **Abstract**

Embodiments of this application provide a cell, a battery, and an electric device. The cell includes a can and an electrode assembly. The can includes a first wall portion, where N vent mechanisms are arranged along a first direction on the first wall portion. The electrode assembly is accommodated in the can. The electrode assembly includes a body portion and a tab. The body portion includes a plurality of sub-regions. Along the first direction, the tab is arranged at at least one end of the body portion. The plurality of sub-regions are consecutively arranged. A length of the body portion is L, and a length of the sub-region is L₁, L=L₁×N, L≥400 mm, and N≥2. A projection of each vent mechanism along a thickness direction of the first wall portion is correspondingly located in one of the sub-regions. Each vent mechanism can discharge a discharge medium generated by thermal runaway in a corresponding sub-region, and the discharge medium generated by thermal runaway in each sub-region can be quickly discharged through a corresponding vent mechanism, which can effectively improve timeliness of venting of a cell, thereby improving reliability of the cell.

## Description

### CROSS-REFERENCE TO RELATED APPLICATIONS

This application claims priority to Chinese Patent Application No. 2023111199944, entitled "CELL, BATTERY, AND ELECTRIC DEVICE" filed on September 1, 2023, which is incorporated by reference in its entirety.

### TECHNICAL FIELD

This application relates to the field of battery technologies, and specifically, to a cell, a battery, and an electric device.

### BACKGROUND

Batteries are widely used in electronic devices, such as mobile phones, laptop computers, battery vehicles, electric vehicles, electric planes, electric ships, electric toy cars, electric toy ships, electric toy planes, and electric tools.

In battery technologies, a vent mechanism may be arranged in a cell, and venting is performed through the vent mechanism when the cell experiences thermal runaway. For a common cell, there is still a case of untimely venting, and reliability of the cell is poor. Therefore, how to improve reliability of a cell is a technical problem that needs to be resolved urgently in the battery technologies.

### SUMMARY

Embodiments of this application provide a cell, a battery, and an electric device, to effectively improve reliability of the cell.

According to a first aspect, an embodiment of this application provides a cell, including a can and an electrode assembly. The can includes a first wall portion, where N vent mechanisms are arranged along a first direction on the first wall portion. The electrode assembly is accommodated in the can. The electrode assembly includes a body portion and a tab. The tab is arranged at at least one end of the body portion. The body portion includes a plurality of sub-regions. The plurality of sub-regions are consecutively arranged along the first direction. A length of the body portion is L, and a length of the sub-region is L₁, L=L₁×N, L≥400 mm, and N≥2. A projection of each vent mechanism along a thickness direction of the first wall portion is correspondingly located in one of the sub-regions, and the thickness direction of the first wall portion intersects with the first direction.

In the foregoing technical solution, a projection of each vent mechanism along the thickness direction of the first wall portion is correspondingly located in one of the sub-regions, so that each sub-region can correspond to one vent mechanism on the can. Each vent mechanism can discharge a discharge medium generated by thermal runaway in a corresponding sub-region, and when thermal runaway occurs in any sub-region, the discharge medium generated by the thermal runaway can be quickly discharged through a corresponding vent mechanism, which can effectively improve timeliness of venting of a cell, thereby improving reliability of the cell.

In some embodiments, the first wall portion supports the body portion along a gravity direction. In this way, a discharge inside the can may be discharged from a bottom of the can. Because the first wall portion is a wall portion supporting the body portion in the can, the first wall portion is pressed by the body portion, and a region that is inside the can and that is located close to the first wall portion is more prone to be blockage and air suffocation, which is not conducive to discharging of a discharge medium. However, because a plurality of vent mechanisms are arranged on the first wall portion, which is more conducive to discharging of a discharge medium that is inside the can and that is located close to the first wall portion, reliability of the cell is improved.

In some embodiments, the can further includes a second wall portion. The first wall portion is arranged opposite to the second wall portion along the thickness direction of the first wall portion. A channel gap is formed between the second wall portion and the body portion. The channel gap is configured for communicating with spaces that are inside the can and that are located at two ends of the body portion along the first direction. The channel gap can communicate with spaces that are inside the can and that are located at two ends of the body portion along the first direction. When thermal runaway occurs in a sub-region located at one end of the body portion, a discharge medium accumulated near the one end of the body portion not only can be discharged through a vent mechanism corresponding to the sub-region, but also can flow to an other end of the body portion through the channel gap, and be discharged through a vent mechanism corresponding to a sub-region at the other end of the body portion, so that the discharge medium inside the cell can be rapidly discharged, thereby improving timeliness of venting of the cell.

In some embodiments, the can further includes a third wall portion and a fourth wall portion. The third wall portion and the fourth wall portion are oppositely arranged along a second direction. The first wall portion connects the third wall portion and the fourth wall portion. A plane formed by intersecting the thickness direction of the first wall portion with the first direction intersects with the second direction. A thickness of the third wall portion and a thickness of the fourth wall portion are both less than a thickness of the first wall portion. In this way, the thickness of the first wall portion can be increased, the deformation resistance of the first wall portion can be improved, and a risk of excessive deformation of the first wall portion caused by expansion of the cell is reduced. Further, impact caused by deformation of the first wall portion on the vent mechanism is reduced, a risk of opening the vent mechanism in advance to vent is reduced, and a service life of the vent mechanism is prolonged.

In some embodiments, a sum of predetermined vent areas of the N vent mechanisms is S₁, and the first wall portion has, along the thickness direction of the first wall portion, a first outer surface facing away from the body portion. An area of the first outer surface is S₂, 0.05≤S₁/S₂≤0.55. S₁/S₂≥0.05, so that a total vent area of the N vent mechanisms is large, which helps to improve a venting rate of the cell and improve timeliness of venting of the cell. S₁/S₂≤0.55, which is conducive to improving strength of the first wall portion.

In some embodiments, 0.15≤S₁/S₂≤0.35.

In some embodiments, the predetermined vent areas of the N vent mechanisms are equal. In this way, vent capabilities of all the vent mechanisms on the first wall portion are substantially consistent, and forming difficulty of the vent mechanisms can be reduced.

In some embodiments, the can includes a first half region and a second half region. Along the first direction, a portion from a middle cross-section of the can to one end of the can is the first half region, and a portion from the middle cross-section of the can to an other end of the can is the second half region. At least one vent mechanism is arranged on both the first half region and the second half region. The first direction is perpendicular to the middle cross-section. During thermal runaway of the cell, venting can be performed through the vent mechanism of the first half region and the vent mechanism of the second half region, so that a discharge medium that is inside the can and that is located in the first half region may be more rapidly discharged through the vent mechanism of the first half region, and a discharge medium in the can that is located in the second half region may be more rapidly discharged through the vent mechanism of the second half region, thereby improving the timeliness of venting of the cell.

In some embodiments, only two vent mechanisms are arranged on the first wall portion, and the two vent mechanisms are respectively located in the first half region and the second half region. In this way, there are not too many vent mechanisms on the first wall portion, so that while implementing rapid venting of the cell, manufacturing costs of the cell are reduced, thereby achieving better economy.

In some embodiments, the vent mechanism is provided with a score groove, a length of the can along the first direction is L₂, and a minimum distance between score grooves of two adjacent vent mechanisms is L₃, L₂>L, and L₃/L₂≥1/6. In this way, a minimum distance between score grooves of two adjacent vent mechanisms is not too small, so that each vent mechanism can correspond to a larger region of the body portion, and each vent mechanism is fully used, thereby improving the timeliness of venting of the cell.

In some embodiments, L₁/L₂≥1/4.

In some embodiments, L₂≥500 mm; and/or L₃≥300 mm. L₂≥500 mm, so that a dimension of the can in the first direction is large, and can meet a requirement for a large capacity of the cell. L₃≥300 mm, so that a minimum distance between two adjacent vent mechanisms is not too small, so that each vent mechanism can correspond to a larger region of the body portion, a discharge medium in a larger region of the body portion can be discharged through a corresponding vent mechanism, and each vent mechanism is fully used, thereby improving the timeliness of venting of the cell.

In some embodiments, a length of the can along the first direction is L₂, the vent mechanism is provided with a score groove, and a sum of maximum spans of the score grooves of the N vent mechanisms along the first direction is D₁, 0.2≤D₁/L₂≤0.6. D₁/L₂≥0.2, so that a sum of maximum spans of score grooves of a plurality of vent mechanisms on the first wall portion along the first direction is large, and a total vent area of the plurality of vent mechanisms on the first wall portion can be enlarged, which is conducive to improving the venting rate of the cell. D₁/L₂≤0.6, so that a sum of maximum spans of score grooves of a plurality of vent mechanisms on the first wall portion along the first direction is not too large, which is conducive to improving strength of the first wall portion.

In some embodiments, the vent mechanism is provided with a score groove, and the vent mechanism forming a weak portion in a region in which the score groove is provided, the weak portion being configured to be crackable to release pressure inside the cell. A weak portion is formed in a region corresponding to a vent mechanism in a manner of providing a score groove, so that a manner of forming the weak portion is simple. The weak portion is a weaker region in the vent mechanism. The weak portion is more easily damaged during thermal runaway of the cell, and vent timely.

In some embodiments, along the thickness direction of the first wall portion, an opening of the score groove faces the body portion. In this way, the weak portion is not easily torn when the first wall portion is deformed due to expansion of the cell, thereby improving long-term reliability of the vent mechanism.

In some embodiments, the vent mechanism includes a vent region, the vent region being configured to open when the weak portion cracks. During venting, a vent region can be opened with a weak portion as a boundary, thereby increasing the vent area of the vent mechanism.

In some embodiments, the score groove is a groove extending along a closed track, and the score groove is provided around the vent region. During venting, after the vent mechanism is cracked along the score groove, the vent region may be separated from the first wall portion, thereby increasing the vent area, and improving the venting rate of the cell.

In some embodiments, the vent mechanism is integrally formed with the first wall portion. In this way, the reliability of the vent mechanism is higher, a process of connecting the vent mechanism and the first wall portion is omitted, and production costs of the cell can be reduced.

In some embodiments, the vent mechanism is arranged separately from the first wall portion, the first wall portion is provided with a vent hole, and the vent mechanism is mounted on the first wall portion and covers the vent hole. The vent mechanism is a component independent of the can. The vent mechanism and the can may be separately produced and assembled, which has low production difficulty and high efficiency.

In some embodiments, the first wall portion is provided with a first groove. The first groove includes a side surface and a first bottom surface. The side surface is arranged around the first bottom surface. The vent hole is provided on the first bottom surface. The vent mechanism is arranged in the first groove and abuts against the first bottom surface. A gap is formed between at least a part of the side surface along a circumferential direction of the first groove and the vent mechanism. When the first wall portion is deformed due to expansion of the cell, the gap between the vent mechanism and the side surface may provide a buffer space for the vent mechanism, to reduce a risk of deformation of the vent mechanism due to squeezing the vent mechanism by the side surface, thereby reducing a risk that the vent mechanism is opened in advance during normal use the cell, and prolonging a service life of the vent mechanism.

In some embodiments, the side surface includes a first region forming a gap with the vent mechanism, a length of the first region along a circumferential direction of the first groove is L₄, and a perimeter of the side surface is L₅, satisfying: 0.2≤L₄/L₅≤1. In this way, a gap is formed between a longer portion of the side surface in the circumferential direction and the vent mechanism, to reduce a range within which the side surface squeezes the vent mechanism during deformation of the first wall portion, and further reduce a risk that the vent mechanism is opened in advance during normal use of the cell.

In some embodiments, a gap is formed between the entire side surface along a circumferential direction of the first groove and the vent mechanism. In this way, there is a gap between an entire periphery of the side surface and the vent mechanism. The gap is an annular structure surrounding the vent mechanism, to further reduce an effect of squeezing the vent mechanism by the side surface during deformation of the first wall portion, and further reduce a risk that the vent mechanism is opened in advance during normal use of the cell.

In some embodiments, the vent mechanism is connected to the bottom wall of the first groove by welding, to form a first weld mark. In this way, the vent mechanism is secured to the first wall portion, to improve connection strength between the vent mechanism and the first wall portion.

In some embodiments, along the thickness direction of the first wall portion, a projection of the first weld mark is entirely located on the vent mechanism. In this way, the vent mechanism can be welded to the bottom wall of the first groove by penetration welding. The welding manner is simple. The first weld mark formed after the welding may penetrate through the vent mechanism and be embedded into the bottom wall of the first groove, which can improve the connection strength between the vent mechanism and the first wall portion. In addition, because along the thickness direction of the first wall portion, a projection of the first weld mark is located on the vent mechanism, the first weld mark does not protrude from an edge of the vent mechanism, so that the first weld mark is not located in the gap between the vent mechanism and the side surface, thereby reducing a risk that the side surface presses the vent mechanism by using the first weld mark when the first wall portion is deformed.

In some embodiments, along the thickness direction of the first wall portion, the vent mechanism is located on a side of the vent hole facing away from the body portion. In this way, the vent mechanism may be mounted on an outer side of the first wall portion, so that the vent mechanism is mounted more conveniently.

In some embodiments, the cell further includes a guard. Along the thickness direction of the first wall portion, the guard is located on the side of the vent mechanism facing away from the body portion, and the guard covers the first groove. The guard can protect the vent mechanism, to reduce a risk that an external material (impurities or an electrolytic solution) enters the first groove and erodes the vent mechanism.

In some embodiments, along the thickness direction of the first wall portion, the first wall portion has a first outer surface facing away from the body portion. The first outer surface is provided with a second groove. The first groove is provided on a bottom surface of the second groove. The guard is at least partially accommodated in the second groove. In this way, a height of the guard protruding from the first outer surface of the first wall portion can be reduced, to reduce the space outside the can occupied by the guard.

In some embodiments, along the thickness direction of the first wall portion, the vent mechanism is located on a side of the vent hole facing the body portion. In this way, the vent mechanism can be mounted on an inner side of the first wall portion, and the first wall portion can protect the vent mechanism, thereby reducing a risk that the first wall portion is damaged by an external component.

In some embodiments, the cell further includes a guard. Along the thickness direction of the first wall portion, the guard is located on a side of the vent hole facing away from the body portion and covers the vent hole. The guard can protect the vent mechanism, to reduce a risk that an external material (impurities or an electrolytic solution) enters the vent hole and erodes the vent mechanism.

In some embodiments, the can includes a case and an end lid. The case has an opening formed at at least one end along the first direction, the case including the first wall portion; and The end lid is in a one-to-one correspondence with the opening, and the end lid closes the opening. During assembly of the cell, the electrode assembly may be first mounted into the case, and then the opening of the case is closed by the end lid, so that the cell is assembled conveniently and quickly.

In some embodiments, the opening is formed at both opposite ends of the case along the first direction. During assembly of the cell, the electrode assembly can enter the case from any end of the case, which can effectively improve assembly efficiency of the cell.

In some embodiments, the case is an integrally formed structure. In this way, the strength of the case can be improved, an anti-destruction capability of the case can be improved, and a service life of the case can be prolonged.

In some embodiments, the case is formed by bending a plate, and two, head and tail ends of the plate are connected to each other along a circumferential direction of the opening. During forming of the case, the plate only needs to be bent, and two, head and tail ends of the plate are connected to each other. A forming manner of the case is simple, so that difficulty in forming the case can be effectively reduced.

In some embodiments, the two ends are connected by welding to form a second weld mark, so that the two ends have good connection strength, and the two ends are more secure after being connected.

In some embodiments, the case further includes a second wall portion. The first wall portion is arranged opposite to the second wall portion along the thickness direction of the first wall portion. The second weld mark is located on the second wall portion, so that the second weld mark and the vent mechanism are located on two opposite wall portions of the case, thereby reducing impact of the two ends of the plate on the vent mechanism when the two ends of the plate are welded, and improving reliability of the vent mechanism.

In some embodiments, the can is in a cuboid shape, and the first direction is parallel to a length direction of the can. The can has a simple structure and is easy to be formed. When the cell is used in a battery, the can of the cell is in a cuboid shape, which can reduce a mounting gap between cells, and helps increase a volume energy density of the battery.

According to a second aspect, an embodiment of this application provides a battery, including the cell according to any embodiment of the first aspect.

According to a third aspect, an embodiment of this application provides an electric device, including the cell according to any embodiment of the first aspect. The cell is configured to provide electric energy for the electric device.

### BRIEF DESCRIPTION OF THE DRAWINGS

To illustrate the technical solutions of embodiments of this application more clearly, the following briefly introduces the accompanying drawings required in embodiments of this application. Apparently, the accompanying drawings described below are only some embodiments of this application. For a person of ordinary skill in the art, other drawings can also be obtained according to the drawings without any creative work.
FIG. 1 is a schematic structural diagram of a vehicle according to some embodiments of this application;
FIG. 2 is an exploded view of a battery according to some embodiments of this application;
FIG. 3 is an axonometric view of a cell according to some embodiments of this application;
FIG. 4 is an exploded view of the cell shown in FIG. 3;
FIG. 5 is a cross-sectional view of a cell according to some embodiments of this application;
FIG. 6 is a cross-sectional view of a can shown in FIG. 5 taken along a YZ plane;
FIG. 7 is a view of the cell shown in FIG. 5 taken along a direction A;
FIG. 8 is a partial enlarged view of the can shown in FIG. 6 at a place B;
FIG. 9 is a partial view of a first wall portion according to some embodiments of this application;
FIG. 10 is a partial view of a first wall portion according to some other embodiments of this application;
FIG. 11 is a partial view of a first wall portion according to still some other embodiments of this application;
FIG. 12 is an exploded view of a cell according to some other embodiments of this application;
FIG. 13 is a cross-sectional view of the cell shown in FIG. 12;
FIG. 14 is a partial enlarged view of the cell shown in FIG. 13 at a place C;
FIG. 15 is a cross-sectional view of a first wall portion shown in FIG. 14;
FIG. 16 is an assembly diagram of a vent mechanism and a first wall portion according to some embodiments of this application;
FIG. 17 is a schematic structural diagram of the first wall portion shown in FIG. 16;
FIG. 18 is an assembly diagram of a vent mechanism and a first wall portion according to some other embodiments of this application;
FIG. 19 is a partial view of a cell according to some other embodiments of this application;
FIG. 20 is a partial view of a cell according to still some other embodiments of this application;
FIG. 21 is an exploded view of a can according to some embodiments of this application;
FIG. 22 is an exploded view of a can according to some other embodiments of this application;
FIG. 23 is a schematic structural diagram of a case shown in FIG. 21;
FIG. 24 is a schematic structural diagram of a case according to some other embodiments of this application;
FIG. 25 is a cross-sectional view of the case shown in FIG. 24 taken along a YZ plane; and
FIG. 26 is an expanded view of the case shown in FIG. 25.

Reference signs: 1-can; 11-case; 111-first wall portion; 1111-vent hole; 1112-first groove; 1112a-side surface; 1112b-first bottom surface; 1112c-bottom wall; 1112d-first region; 1112e-first side surface; 1112f-second side surface; 1113-first outer surface; 1114-second groove; 1115-first surface; 1116-protrusion; 112-second wall portion; 1121-first end; 1121a-first end surface; 1122-second end portion; 1122a-second end surface; 113-third wall portion; 114-fourth wall portion; 115-second weld mark; 12-end lid; 13-channel gap; 14-first space; 15-second space; 16-first half region; 17-second half region; 2-electrode assembly; 21-body portion; 211-sub-region; 22-tab; 3-vent mechanism; 31-score groove; 311-first arc segment; 312-first straight line segment; 313-second straight line segment; 314-third straight line segment; 315-fourth straight line segment; 316-fifth straight line segment; 317-first connection line; 318-second connection line; 32-weak portion; 33-vent region; 34-outer peripheral surface; 4-electrode terminal; 5-gap; 6-first weld mark; 7-guard; 10-cell; 20-box; 201-first part; 202-second part; 100-battery; 200-controller; 300-motor; 1000-vehicle; W-middle cross-section; X-first direction; Y-second direction; Z-thickness direction of the first wall portion.

### DETAILED DESCRIPTION

To make the objectives, technical solutions, and advantages of embodiments of this application clearer, the following clearly describes the technical solutions in the embodiments of this application with reference to the accompanying drawings in the embodiments of this application. Apparently, the described embodiments are some of the embodiments of this application rather than all the embodiments. All other embodiments obtained by a person of ordinary skill in the art based on the embodiments of this application without making creative efforts shall fall within the protection scope of this application.

Unless otherwise defined, all technical and scientific terms used herein have the same meanings as what is normally understood by a person skilled in the technical field of this application. The terms used in the specification of this application are merely intended to describe specific embodiments but not intended to limit this application. The terms "include", "have" and any other variants in the specification, claims, and description of accompanying drawings of this application mean to cover the non-exclusive inclusion. The terms "first", "second", and the like in the description and claims of this application or the above drawings are used to distinguish different objects, rather than to describe a specific order or primary and secondary relationship.

In this application, the phase "embodiment" mentioned means that the specific features, structures, or characteristics described with reference to the embodiments can be included in at least one embodiment of this application. The phrase appearing at various positions in this specification may neither necessarily mean a same embodiment, nor mean an independent or optional embodiment exclusive from another embodiment.

The term "and/or" in this application describes only an association relationship for describing associated objects and represents that three relationships may exist. For example, A and/or B may represent the following three cases: Only A exists, both A and B exist, and only B exists. In addition, the character "/" in this application generally indicates that the associated objects have an "or" relationship.

In the embodiments of this application, the same reference signs denote the same components, and for the sake of brevity, detailed descriptions of the same components are omitted in different embodiments. It should be understood that the thickness, length, width and other dimensions of various components in the embodiments of this application shown in the drawings, as well as the overall dimensions, such as a thickness, a length, and a width, of the integrated device are only exemplary descriptions, and should not constitute any limitation to this application.

The phrase "plurality of" appearing in this application means two or more (including two).

In embodiments of this application, the cell may be a secondary battery. A secondary battery refers to a cell that can be recharged to activate active materials and continue to be used after the cells are discharged.

The cell includes, but is not limited to, a lithium-ion battery, a Na-ion battery, a Na-Li-ion battery, a Li-metal battery, a Na-metal battery, a Li-S battery, a Li-ion battery, a Ni-H battery, a Ni-Cd battery, a Lead battery, and the like.

The cell generally includes an electrode assembly. The electrode assembly includes a positive electrode, a negative electrode, and a separator. During charge and discharge of the cell, active ions (such as lithium ions) intercalate and de-intercalate back and forth between the positive electrode and the negative electrode. The separator is arranged between the positive electrode and the negative electrode, which can reduce a risk of a short circuit between the positive and negative electrodes while allowing active ions to pass.

In some embodiments, the positive electrode can be a positive electrode plate. The positive electrode plate can include a positive electrode current collector and a positive electrode active material arranged on at least one surface of the positive electrode current collector.

For example, the positive electrode current collector has two surfaces opposite to each other in a thickness direction of the positive electrode current collector, and the positive electrode active material is arranged on either or both of the two opposite surfaces of the positive electrode current collector.

For example, the positive electrode current collector may be a metal foil or a composite current collector. For example, as the metal foil, aluminum with a silver-plated surface stainless steel with a silver-plated surface, stainless steel, copper, aluminum, nickel, a carbon electrode, carbon, nickel, titanium, or the like may be used. The composite current collector can include a polymer material substrate layer and a metal layer. The composite current collector can be formed by forming a metal material (aluminum, an aluminum alloy, nickel, a nickel alloy, titanium, a titanium alloy, silver, a silver alloy, or the like) on a polymer material substrate (for example, a substrate of polypropylene, polyethylene terephthalate, polybutylene terephthalate, polystyrene, polyethylene, or the like).

For example, the positive electrode active material may include at least one of the following materials: a lithium-containing phosphate, a lithium transition metal oxide, and respective modified compounds thereof. However, this application is not limited to these materials, and other conventional materials that can be used as positive electrode active materials for batteries can also be used. It is possible to use only one of these positive active materials alone, or to use more than two in combination. An example of the lithium-containing phosphate may include, but is not limited to, at least one of lithium iron phosphate (for example, LiFePO₄ (also referred to as LFP for short)), a composite material of lithium iron phosphate and carbon, lithium manganese phosphate (for example, LiMnPO₄), a composite material of lithium manganese phosphate and carbon, lithium iron manganese phosphate, and a composite material of lithium manganese iron phosphate and carbon. An example of the lithium transition metal oxide may include, but is not limited to, a lithium cobalt oxide (such as LiCoO₂), a lithium nickel oxide (such as LiNiO₂), a lithium manganese oxide (such as LiMnO₂ or LiMn₂O₄), a lithium nickel cobalt oxide, a lithium manganese cobalt oxide, a lithium nickel manganese oxide, a lithium nickel cobalt manganese oxide (such as LiNi_{1/3}Co_{1/3}Mn_{1/3}O₂ (also referred to as NCM₃₃₃ for short), LiNi_{0.5}Co_{0.2}Mn_{0.3}O₂ (also referred to as NCM₅₂₃ for short), LiNi_{0.5}Co_{0.25}Mn_{0.25}O₂ (also referred to as NCM₂₁₁ for short), LiNi_{0.6}Co_{0.2}Mno₂O₂ (also referred to as NCM₆₂₂ for short), LiNi_{0.8}Co_{0.1}Mn_{0.1}O₂ (also referred to as NCM₈₁₁ for short), a lithium nickel cobalt aluminum oxide (such as LiNi_{0.85}Co_{0.15}Al_{0.05}O₂), and at least one of their modified compounds.

In some embodiments, the positive electrode may be made of foamed metal. The foamed metal may be foamed nickel, foamed copper, foamed aluminum, foamed alloy, or foamed carbon. When the foam metal is used as the positive electrode, the surface of the foam metal may not be provided with the positive electrode active material. Certainly, a positive electrode active material may also be provided. For example, a lithium source material, potassium metal, or sodium metal may further be filled and/or deposited in the foamed metal, and the lithium source material is lithium metal and/or a lithium-rich material.

In some embodiments, the negative electrode may be a negative electrode plate. The negative electrode plate may include a negative electrode current collector.

For example, the negative electrode current collector may be a metal foil, a foam metal, or a composite current collector. For example, as the metal foil, a silver-surface-processed aluminum or stainless steel, copper, aluminum, nickel, a carbon electrode, carbon, nickel, or titanium may be used. The foamed metal may be foamed nickel, foamed copper, foamed aluminum, foamed alloy, or foamed carbon. The composite current collector can include a polymer material substrate layer and a metal layer. The composite current collector can be formed by forming a metal material (copper, copper alloys, nickel, nickel alloys, titanium, titanium alloys, silver and silver alloys, or the like) on a polymer material substrate (such as substrate of polypropylene, polyethylene terephthalate, polybutylene terephthalate, polystyrene, or polyethylene).

By way of example, the negative electrode plate can include a negative electrode current collector and a negative electrode active material arranged on at least one surface of the negative electrode current collector.

For example, the negative electrode current collector has two surfaces opposite to each other in its own thickness direction, and the negative electrode material is provided on either or both of the two opposite surfaces the negative electrode current collector.

By way of example, the negative electrode active material can be a negative electrode active material well known in the art for cells. For example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, silicon oxide, a silicon-carbon composite, a silicon-nitride composite, and a silicon alloy. The tin-based material may be selected from at least one of elemental tin, tin oxide, and a tin alloy. However, this application is not limited to these materials, and other conventional materials that can be used as the negative electrode active material of the battery may also be used. These negative electrode active materials may be used individually or in combination of more than two thereof.

In some embodiments, a material of the positive electrode current collector may be aluminum, and a material of the negative electrode current collector may be copper.

In some embodiments, the separator is a separator film. Any well-known separator film of a porous structure having good chemical stability and mechanical stability may be used as the separator film.

For example, a material of the separator film may include at least one of glass fiber, non-woven fabric, polyethylene, polypropylene, and polyvinylidene fluoride. The separator film may be a single-layer film, or may be a multilayer composite film. When the separator film is a multilayer composite film, each layer may be made of the same or different materials. The separator may be a separator component located between the positive and negative electrodes, or may be attached to the surfaces of the positive and negative electrodes.

In some embodiments, the separator is a solid electrolyte. The solid-state electrolyte is provided between the positive electrode and the negative electrode, and also functions to transmit ions and isolate the positive electrode and the negative electrode.

In some implementations, the cell further includes an electrolyte, and the electrolyte transmits ions between the positive electrode and the negative electrode. The electrolyte may be in a liquid, gel, or solid state. The liquid-state electrolyte includes an electrolyte salt and a solvent.

In some embodiments, the electrolytic salt may include at least one of lithium hexafluorophosphate, lithium tetrafluoroborate, lithium perchlorate, lithium hexafluoroborate, lithium bis(fluorosulfonyl)imide, lithium bis-trifluoromethanesulfon imide, lithium trifluoromethanesulfonate, lithium difluorophosphate, lithium difluorooxalatoborate, lithium bisoxalatoborate, lithium difluorobisoxalate phosphate, and lithium tetrafluoro oxalate phosphate.

In some embodiments, the solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane dimethyl sulfone, ethyl methyl sulfone, and diethyl sulfone. The solvent may optionally be an ether solvent. The ether solvent may include one or more of ethylene glycol dimethyl ether, ethylene glycol diethyl ether, diethylene glycol dimethyl ether, triethylene glycol dimethyl ether, 1,3-dioxolane, tetrahydrofuran, methyltetrahydrofuran, diphenylether, or a crowned ether.

The gel-state electrolyte includes a framework network with a polymer as an electrolyte, in combination with an ion liquid-a lithium salt.

The solid-state electrolyte includes a polymer solid-state electrolyte, an organic solid-state electrolyte, or a composite solid-state electrolyte.

As an example, the polymer solid-state electrolyte may be polyether (polyoxyethylene), polysiloxane, polyearbonate, polyacrylonitrile, polyvinylidene fluoride, polymethyl methacrylate, a monoionic polymer, a polyionic liquid-lithium salt, or a combination thereof.

As an example, the organic solid-state electrolyte may include one or more of an oxide solid electrolyte (crystalline perovskite, a sodium superconducting ion conductor, garnet, or an amorphous LiPON thin film), a sulfide solid electrolyte (crystalline lithium superconducting ion conductor (lithium germanium phosphorus sulfide, and argyrodite) an amorphous sulfide), a halide solid electrolyte, a nitride solid electrolyte, and a hydride solid electrolyte.

For example, the composite solid-state electrolyte is formed by filling the inorganic solid-state electrolyte into the polymeric solid-state electrolyte.

In some embodiments, the electrode assembly has a wound structure. The positive electrode plate and the negative electrode plate are wound into a wound structure.

In some embodiments, the electrode assembly has a laminated structure.

For example, a plurality of positive electrode plates and a plurality of negative electrode plates can be respectively arranged, and the plurality of positive electrode plates and the plurality of negative electrode plates are arranged in an alternately stacked manner.

By way of example, a plurality of positive electrode plates can be arranged, and the negative electrode plates are folded into a plurality of stacked folded segments, and one positive electrode plate is sandwiched between adjacent folded segments.

By way of example, both the positive electrode plates and the negative electrode plates are folded to form a plurality of folded segments arranged in a stacked manner.

By way of example, a plurality of separators can be arranged, which are respectively arranged between any adjacent positive electrode plates or negative electrode plates.

By way of example, the separators can be consecutively arranged between any adjacent positive electrode plates or negative electrode plates by folding or winding.

In some embodiments, the shape of the electrode assembly can be cylindrical, flat, polygonal prism-shaped, etc.

In some embodiments, the electrode assembly is provided with tabs, and the tabs can conduct current from the electrode assembly. The tabs include a positive electrode tab and a negative electrode tab.

In some implementations, the cell may include a can. The can is configured to package components such as the electrode assembly and the electrolyte. The can may be a steel can, an aluminum can, a plastic can (such as a polypropylene can), a composite metal can (such as a copper-aluminum composite can), an aluminum-plastic film, etc.

By way of example, the cell may be a cylindrical cell, a prismatic cell, a pouch cell, or a cell in another shape. The prismatic cell includes a square-can cell, a blade-shaped cell, or a polygonal prismatic battery. The polygonal prismatic battery is, for example, a hexagonal prismatic battery.

A battery mentioned in the embodiments of this application refers to a single physical module including one or more cells to provide a higher voltage and a higher capacity.

In some embodiments, the battery may be a battery module. When there are a plurality of cells, the plurality of cells are arranged and fixedly formed into a battery module.

In some embodiments, the battery may be a battery pack. The battery pack includes a box and a cell, and the cell or battery module is accommodated in the box.

In some embodiments, the box can serve as part of a chassis structure of a vehicle. For example, a part of the box may become at least a part of a floor of the vehicle, or a part of the box may become at least a part of a cross beam and a longitudinal beam of the vehicle.

In some embodiments, the battery may be an energy storage device. The energy storage device includes an energy storage container, an energy storage electric cabinet, and the like.

The development of the battery technology needs to allow for a plurality of design factors, including performance parameters such as an energy density, a cycle life, a discharge capacity, a charge rate, and a discharge rate, and also needs to ensure reliability of the cell.

In battery technologies, a vent mechanism may be arranged in a cell to improve the reliability of the cell. The vent mechanism on the cell has important impact on the reliability of the battery. For example, when a short circuit, overcharge, or the like occurs, it may cause thermal runaway inside the cell, resulting in a sudden rise in pressure or temperature. In this case, internal pressure and temperature can be released outward through the vent mechanism to reduce a probability of explosion and fire of the cell.

In a common cell, the cell includes a can and an electrode assembly. The electrode assembly is accommodated in the can. The electrode assembly includes a body portion and a tab. The tab is arranged at one or both ends of the body portion along a preset direction. Only one vent mechanism is arranged on the can, and the vent mechanism is located at one end of the can along the preset direction. When the cell is in thermal runaway, a discharge medium inside the can is discharged through the vent mechanism, to release pressure inside the cell. In such a cell, when a length of the body portion is greater than or equal to 400 mm, during thermal runaway of the cell, a discharge medium generated in a region of the body portion close to the vent mechanism may flow to the vent mechanism. However, it is difficult for a discharge medium generated in a region of the body portion far away from the vent mechanism to flow to the vent mechanism. Consequently, it is prone to untimely venting, resulting in poor reliability of the cell.

In view of this, embodiments of this application provide a cell. N vent mechanisms arranged along a first direction are arranged on the first wall portion of the can, where L≥400 mm, and N≥2, and the body portion of the electrode assembly is divided into N sub-regions consecutively arranged along the first direction, lengths of the sub-regions are equal along the first direction, and a projection of each vent mechanism along a thickness direction of the first wall portion is correspondingly located in one of the sub-regions.

In such a cell, when a length of the body portion is greater than or equal to 400 mm, each sub-region can correspond to one vent mechanism on the can. Each vent mechanism can discharge a discharge medium generated by thermal runaway in a corresponding sub-region, and when thermal runaway occurs in any sub-region, the discharge medium generated by the thermal runaway can be quickly discharged through a corresponding vent mechanism, which can effectively improve timeliness of venting of a cell, thereby improving reliability of the cell.

The cell described in this embodiment of this application is applicable to a battery and an electric device that uses the battery.

The electric device may be a vehicle, a mobile phone, a portable device, a laptop computer, a ship, a spacecraft, an electric toy, an electric tool, and the like. The vehicle may be a fuel vehicle, a gas vehicle or a new energy vehicle; the new energy vehicle may be a pure electric vehicle, a hybrid vehicle, or an extended range vehicle, etc. The spacecraft include an airplane, a rocket, a space shuttle, a spaceship, and the like. The electric toy includes a fixed or mobile electric toy, for example, a game console, an electric car toy, an electric ship toy, and an electric airplane toy. The electric tool includes an electrical metal cutting tool, an electrical grinding tool, an electrical assembling tool, and a power tool for use in railways. Examples of the power tool are an electrical drill, an electrical grinder, an electrical wrench, an electrical screwdriver, an electrical hammer, an electrical impact drill, a concrete vibrator, an electrical planer, and the like. Embodiments of this application do not impose special limitations on the foregoing electric device.

In the following embodiments, a vehicle is used as an example of the electric device for the convenience of description.

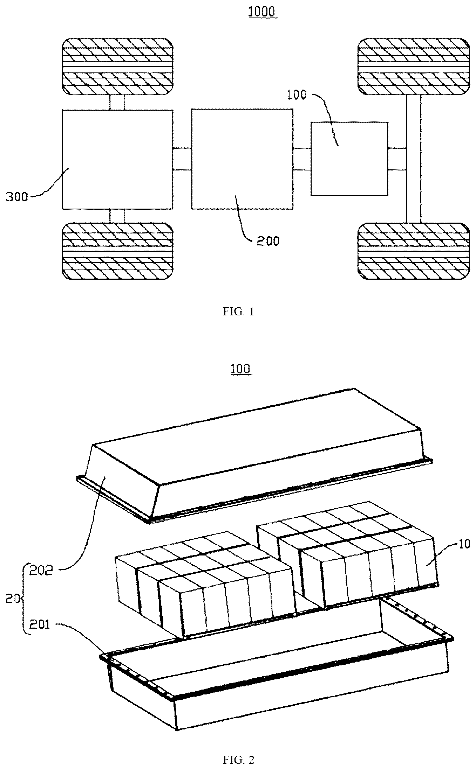

Referring to FIG. 1, FIG. 1 is a schematic structural diagram of a vehicle 1000 according to some embodiments of this application. A battery 100 is arranged inside the vehicle 1000, and the battery 100 may be arranged at the bottom, the head, or the tail of the vehicle 1000. The battery 100 may be configured to supply power to the vehicle 1000. For example, the battery 100 may be used as a power supply for operating the vehicle 1000.

The vehicle 1000 may further include a controller 200 and a motor 300. The controller 200 is configured to control the battery 100 to supply power to the motor 300, for example, to meet working power requirements during starting, navigation, and traveling of the vehicle 1000.

In some embodiments of this application, the battery 100 can not only serve as a power supply for operating the vehicle 1000, but can also serve as a power supply for driving the vehicle 1000, in place of or partially in place of fuel or natural gas, to provide driving power for the vehicle 1000.

Referring to FIG. 2, FIG. 2 is an exploded view of a battery 100 according to some embodiments of this application. The battery 100 includes a cell 10 and a box 20, and the cell 10 is accommodated in the box 20.

The box 20 is a component configured to accommodate the cell 10. The box 20 provides an accommodation space for the cell 10. The box 20 may be in various structures. In some embodiments, the box 20 may include a first part 201 and a second part 202. The first part 201 and the second part 202 fit and cover each other to define the accommodation space configured to accommodate the cell 10. The first part 201 and the second part 202 may be in various shapes, such as a cuboid or a cylinder. The first part 201 may be a hollow structure opened on one side. The second part 202 may also be a hollow structure opened on one side. An open side of the second part 202 covers an open side of the first part 201, such that a box 20 having an accommodating space is formed. Alternatively, the first part 201 may be a hollow structure opened on one side. The second part 202 is a plate structure. The second part 202 covers an open side of the first part 201, such that a box 20 having an accommodating space is formed A junction between the first part 201 and the second part 202 may be sealed by a sealing element. The sealing element may be a sealing ring, a sealant, or the like.

There may be one or more cells 10 in the battery 100. If there are a plurality of cells 10, the plurality of cells 10 may be connected in series, parallel, or series-and-parallel pattern. The series-and-parallel pattern means a combination of series connection and parallel connection of the plurality of cells 10. The plurality of cells 10 are connected in series, parallel, or series-and-parallel pattern to form a battery module first, and then a plurality of battery modules are connected in series, parallel, or series-and-parallel pattern to form an entirety that is to be accommodated in the box 20. Alternatively, all cells 10 are directly connected in series, parallel, or series-and-parallel pattern, and then the entirety of all cells 10 is accommodated in the box 20.

In some embodiments, the battery 100 may further include a busbar component. The plurality of cells 10 may be electrically connected by the busbar component, so as to implement series, parallel, or series-and-parallel connection between the plurality of cells 10. The busbar component may be a metal conductor such as a copper conductor, an iron conductor, an aluminum conductor, a stainless steel conductor, and an aluminum alloy conductor.

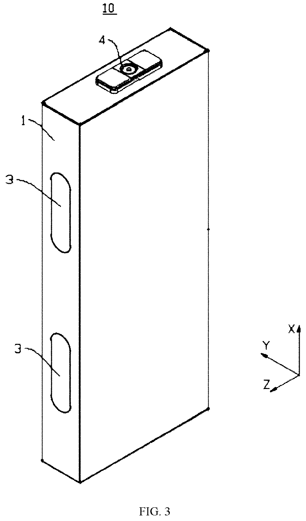

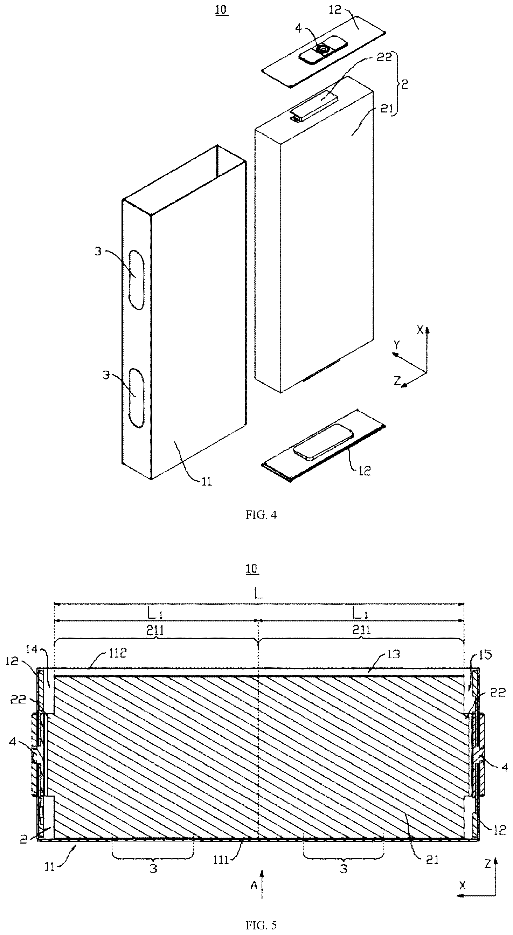

Referring to FIG. 3 and FIG. 4, FIG. 3 is an axonometric view of a cell 10 according to some embodiments of this application; and FIG. 4 is an exploded view of the cell 10 shown in FIG. 3. The cell 10 may include a can 1, an electrode assembly 2, and a vent mechanism 3.

The can 1 is a component configured to accommodate the electrode assembly 2, an electrolyte, and the like. For example, the can 1 may include a case 11 and an end lid 12.

The case 11 may be a hollow structure with an opening formed at one end, or may be a hollow structure with openings formed at two opposite ends. The case 11 may have a plurality of shapes, for example, a cylindrical shape and a prismatic shape. The case 11 may be made of various materials, such as copper, iron, aluminum, steel, aluminum alloy, and plastic.

The end lid 12 is a component that closes the opening of the case 11 to isolate the internal environment of the cell 10 from the external environment. The end lid 12 and the case 11 jointly define a space for accommodating the electrode assembly 2, the electrolyte, and other components. The shape of the end lid 12 may fit the shape of the can 1. For example, the case 11 is a cuboidal structure, and the end lid 12 is a rectangular plate-shaped structure that fits the can 1. For another example, the case 11 is a cylindrical structure, and the end lid 12 is a circular plate-shaped structure that fits the case 11. The end lid 12 can also be made of various materials, for example, copper, iron, aluminum, steel, aluminum alloys, and plastic. The material of the end lid 12 may be the same as or different from the material of the case 11.

In an embodiment in which the case 11 has an opening formed at one end, one end lid 12 may be correspondingly arranged. In an embodiment in which the case 11 has openings formed at two ends, two end lids 12 may be correspondingly arranged. The two end lids 12 respectively close the two openings of the case 11, and the two end lids 12 and the case 11 jointly define an accommodating space.

The vent mechanism 3 is a component that releases pressure inside the cell 10. A discharge medium inside the cell 10 may be discharged through the vent mechanism 3 when pressure inside the cell 10 reaches a threshold, to vent. The discharge medium includes, but is not limited to: an electrolytic solution, dissolved or split positive and negative electrode plates, fragments of the separator, gas generated by reaction, flames, and the like. The vent mechanism 3 may be arranged on the case 11, or may be arranged on the end lid 12.

In some embodiments, the cell 10 may further include an electrode terminal 4. The electrode terminal 4 is arranged on the can 1, and the electrode terminal 4 is configured to electrically connect to the tab 22 of the electrode assembly 2, to input or output electric energy of the cell 10. The electrode terminal 4 may be arranged on the case 11 of the can 1, or may be arranged on the end lid 12 of the can 1. The electrode terminal 4 and the tab 22 may be directly connected. For example, the electrode terminal 4 and the tab 22 are directly welded. The electrode terminal 4 and the tab 22 may also be indirectly connected. For example, the electrode terminal 4 and the tab 22 are indirectly connected by a current collecting member.

For example, as shown in FIG. 4, the case 11 is a hollow structure with openings formed at two opposite ends of the case 11. End lids 12 are arranged at both the opposite ends of the case 11. Electrode terminals 4 are arranged on the end lids 12 at both the ends of the case 11. Tabs 22 are formed at both opposite ends of the electrode assembly 2. A tab 22 at one end of the electrode assembly 2 is a positive electrode tab, and a tab 22 at the other end of the electrode assembly 2 is a negative electrode tab. An electrode terminal 4 on one end lid 12 is electrically connected to the positive electrode tab. An electrode terminal 4 on the other end lid 12 is electrically connected to the negative electrode tab.

Referring to FIG. 5, FIG. 5 is a cross-sectional view of the cell 10 according to some embodiments of this application. Embodiments of this application provide a cell 10. The cell 10 includes a can 1 and an electrode assembly 2. The can includes 1 a first wall portion 111, where N vent mechanisms 3 are arranged along a first direction X on the first wall portion 111. The electrode assembly 2 is accommodated in the can 1. The electrode assembly 2 includes a body portion 21 and a tab 22. The tab 22 is arranged at at least one end of the body portion 21. The body portion 21 includes a plurality of sub-regions 211. The plurality of sub-regions 211 are consecutively arranged along the first direction X. A length of the body portion 21 is L, and a length of the sub-region 211 is L₁, L=L₁×N, L≥400 mm, and N≥2. A projection of each vent mechanism 3 along a thickness direction Z of the first wall portion is correspondingly located in one of the sub-regions 211, and the thickness direction Z of the first wall portion intersects with the first direction X.

The can 1 may be in a shape of a cylinder, a prism, or the like. The prism may be a triangular prism, a quadrangular prism, a pentagonal prism, a hexagonal prism, or the like. The quadrangular prism may include a cuboid, a cube, or the like. In an embodiment in which the can 1 is in a shape of a cylinder, the first direction X may be parallel to an axial direction of the can 1. In an embodiment in which the can 1 is in a shape of a cuboid, the first direction X may be parallel to a length direction of the can 1.

The first wall portion 111 may be an end lid 12 of the can 1. It may be understood that a vent mechanism 3 is arranged on the end lid 12. The first wall portion 111 may also be at least one wall portion of a case 11 in the can 1. It may be understood that a vent mechanism 3 is arranged on the can 1. There may be two, three, four, five, six, or more vent mechanisms 3 on the first wall portion 111. Therefore, N may be 2, 3, 4, 5, 6, or the like.

The vent mechanism 3 is a component that releases pressure inside the cell 10. A discharge medium inside the cell 10 may be discharged through the vent mechanism 3 when pressure inside the cell 10 reaches a threshold, to vent. The discharge medium includes, but is not limited to: an electrolytic solution, dissolved or split positive and negative electrode plates, fragments of the separator, gas generated by reaction, flames, and the like. The vent mechanism 3 and the first wall portion 111 may be integrally formed and arranged, or may be separately arranged.

The body portion 21 has two opposite ends along the preset direction. A tab 22 may be arranged at one end of the body portion 21, or tabs 22 may be arranged at both opposite ends of the body portion 21. The preset direction may be parallel to the first direction X, or may intersect with the first direction X. For example, the preset direction is perpendicular to the first direction X. For example, the preset direction is parallel to the first direction X. That is, a tab 22 is arranged at at least one end of the body portion 21 along the first direction X. In the embodiment shown in FIG. 5, tabs 22 are arranged at both ends of the body portion 21 in the first direction X, and a tab 22 at one end is a positive electrode tab, and a tab 22 at the other end is a negative electrode tab. Electrode terminals 4 are arranged at both ends of the can 1. An electrode terminal 4 at one end of the can 1 is electrically connected to a tab 22 at one end of the body portion 21, and an electrode terminal 4 at the other end of the can 1 is electrically connected to a tab 22 at the other end of the body portion 21.

The electrode assembly 2 may include a positive electrode plate, a negative electrode plate, and a separator. The electrode assembly 2 may be a wound structure formed by winding the positive electrode plate, the separator, and the negative electrode plate, or a laminated structure formed by laminating the positive electrode plate, the separation, and the negative electrode plate. The body portion 21 is a part of the electrode assembly 2 corresponding to a region in which an electrode plate is coated with an active material layer. The positive electrode tab may be a part of the positive electrode plate uncoated with a positive electrode active material layer, and the negative electrode tab may be a part of the negative electrode plate uncoated with a negative electrode active material layer.

L=L₁×N means that, along the first direction X, the body portion 21 is evenly divided into a plurality of sub-regions 211, a quantity of the sub-regions 211 is equal to a quantity of the vent mechanisms 3 arranged along the first direction X on the first wall portion 111, and lengths of all the sub-regions 211 are equal. Using N=2 as an example, there are two sub-regions 211 in the body portion 21, and a length L₁ of each sub-region 211 along the first direction X is L/2.

L may be any point value in 400 mm, 500 mm, 600 mm, 700 mm, 800 mm, 900 mm, and 1000 mm or a value in a range between any two thereof.

A projection of each vent mechanism 3 along a thickness direction Z of the first wall portion is correspondingly located in one of the sub-regions 211. In other words, viewed in the thickness direction Z of the first wall portion, each vent mechanism 3 is blocked by one corresponding sub-region 211.

The thickness direction Z of the first wall portion may be perpendicular to the first direction X or may be arranged at an acute angle or an obtuse angle to the first direction X. For example, in FIG. 5, a thickness direction Z of the first wall portion is perpendicular to the first direction X.

For a common cell 10, when a length of the body portion 21 is greater than or equal to 400 mm, a large capacity requirement on the cell 10 may be satisfied, but a vent capability is poor, resulting in occurrence of untimely venting. However, in this embodiment, a projection of each vent mechanism 3 along the thickness direction Z of the first wall portion is correspondingly located in one of the sub-regions 211, so that each sub-region 211 can correspond to one vent mechanism 3 on the can 1. Each vent mechanism 3 can discharge a discharge medium generated by thermal runaway in a corresponding sub-region 211, and when thermal runaway occurs in any sub-region 211 of the body portion 21, the discharge medium generated by the thermal runaway can be quickly discharged through a corresponding vent mechanism 3, which can effectively improve timeliness of venting of a cell 10, thereby improving reliability of the cell 10.

In some embodiments, the first wall portion 111 supports the body portion 21 along a gravity direction.

The thickness direction Z of the first wall portion may be parallel to the gravity direction. The first wall portion 111 is a wall portion of the can 1 supporting the body portion 21 in the gravity direction, and the first wall portion 111 bears the gravity of the body portion 21. The first wall portion 111 may be directly in contact with the body portion 21 to support the body portion 21, or an intermediate member may be arranged between the first wall portion 111 and the body portion 21. The first wall portion 111 supports the body portion 21 through the intermediate member. The intermediate piece may be an insulation member arranged between the first wall portion 111 and the body portion 21.

In this embodiment, the first wall portion 111 supports the body portion 21 along a gravity direction. A discharge inside the can 1 may be discharged from a bottom of the can 1. Because the first wall portion 111 is a wall portion supporting the body portion 21 in the can 1, the first wall portion 111 is pressed by the body portion 21, and a region that is inside the can 1 and that is located close to the first wall portion 111 is more prone to be blockage and air suffocation, which is not conducive to discharging of a discharge medium. However, because a plurality of vent mechanisms 3 are arranged on the first wall portion 111, which is more conducive to discharging of a discharge medium that is inside the can 1 and that is located close to the first wall portion 111, reliability of the cell 10 is improved.

In some embodiments, still referring to FIG. 5, the can 1 further includes a second wall portion 112, and the first wall portion 111 is arranged opposite to the second wall portion 112 along the thickness direction Z of the first wall portion. The first wall portion 111 supports the body portion 21 along the gravity direction. A channel gap 13 is formed between the second wall portion 112 and the body portion 21. The channel gap 13 is configured for communicating with spaces that are inside the can 1 and that are located at two ends of the body portion 21 along the first direction X.

The first wall portion 111 and the second wall portion 112 are two opposite wall portions of the can 1, and the first wall portion 111 and the second wall portion 112 may have a same thickness or different thicknesses.

The channel gap 13 is formed between the second wall portion 112 and the body portion 21. Spaces that are inside the can 1 and that are located at two ends of the body portion 21 along the first direction X are respectively a first space 14 and a second space 15, and the channel gap 13 communicates with the first space 14 and the second space 15. When the cell 10 is in thermal runaway, a discharge medium of one of the first space 14 and the second space 15 may flow to the other through the channel gap 13.

In this embodiment, the channel gap 13 can communicate with spaces that are inside the can 1 and that are located at two ends of the body portion 21 along the first direction X. When thermal runaway occurs in a sub-region 211 located at one end of the body portion 21, a discharge medium accumulated near the one end of the body portion 21 not only can be discharged through a vent mechanism 3 corresponding to the sub-region 211, but also can flow to an other end of the body portion 21 through the channel gap 13, and be discharged through a vent mechanism 3 corresponding to a sub-region 211 at the other end of the body portion 21, so that the discharge medium inside the cell 10 can be rapidly discharged, thereby improving timeliness of venting of the cell 10.

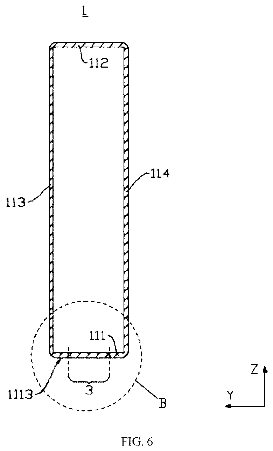

In some embodiments, referring to FIG. 6, FIG. 6 is a cross-sectional view of a can 1 shown in FIG. 5 taken along a YZ plane. The can 1 further includes a third wall portion 113 and a fourth wall portion 114. The third wall portion 113 and the fourth wall portion 114 are oppositely arranged along a second direction Y. The first wall portion 111 connects the third wall portion 113 and the fourth wall portion 114. A plane formed by intersecting the thickness direction Z of the first wall portion with the first direction X intersects with the second direction Y. A thickness of the third wall portion 113 and a thickness of the fourth wall portion 114 are both less than a thickness of the first wall portion 111.

A plane formed by intersecting the thickness direction Z of the first wall portion with the first direction X intersects with the second direction Y, so that the thickness direction Z of the first wall portion, the first direction X, and the second direction Y are not coplanar.

The thickness of the first wall portion 111 may be equal to the thickness of the second wall portion 112. The thickness of the first wall portion 111 and the thickness of the second wall portion 112 may also be different. For example, the thickness of the first wall portion 111 is greater than the thickness of the second wall portion 112.

For example, the second wall portion 112 connects the third wall portion 113 and the fourth wall portion 114. A distance between an inner surface of the first wall portion 111 and an inner surface of the second wall portion 112 is greater than a distance between the inner surface of the third wall portion 113 and an inner surface of the fourth wall portion 114. The thickness of the first wall portion 111 is equal to the thickness of the second wall portion 112.

In this embodiment, the thickness of the third wall portion 113 and the thickness of the fourth wall portion 114 are both smaller than the thickness of the first wall portion 111, so that the thickness of the first wall portion 111 can be increased, the deformation resistance of the first wall portion 111 can be improved, and a risk of excessive deformation of the first wall portion 111 caused by expansion of the cell 10 is reduced. Further, impact caused by deformation of the first wall portion 111 on the vent mechanism 3 is reduced, a risk of opening the vent mechanism 3 in advance to vent is reduced, and a service life of the vent mechanism 3 is prolonged.

In some embodiments, a sum of predetermined vent areas of the N vent mechanisms 3 is S₁, and the first wall portion 111 has, along the thickness direction Z of the first wall portion, a first outer surface 1113 facing away from the body portion 21. An area of the first outer surface 1113 is S₂, 0.05≤S₁/S₂≤0.55.

Predetermined vent areas of the N vent mechanisms 3 may be equal, or predetermined vent areas of at least two vent mechanisms 3 may be different. The predetermined vent area of the vent mechanism 3 is a maximum area that the vent mechanism 3 is predicted to open.

Using an example in which two vent mechanisms 3 arranged along the first direction X are arranged on the first wall portion 111, it may be understood that N=2, and a predetermined vent area of one vent mechanism 3 is S₁₁, and a predetermined vent area of the other vent mechanism 3 is S₁₂, S₁=S₁₁+S₁₂. The area of the first outer surface 1113 is an area of a region defined by an outer edge of the first outer surface 1113.

For example, the first wall portion 111 is a rectangular wall portion, and the first outer surface 1113 of the first wall portion 111 is rectangular. A length and a width of the first outer surface 1113 of the first wall portion 111 are measured, and the length and the width of the first outer surface 1113 are multiplied to calculate the area of the first outer surface 1113 of the first wall portion 111. In an embodiment in which the first wall portion 111 connects the third wall portion 113 and the fourth wall portion 114, the first outer surface 1113 of the first wall portion 111 and an outer surface of the third wall portion 113 may be connected by a rounded corner surface, and the first outer surface 1113 of the first wall portion 111 and an outer surface of the fourth wall portion 114 may be connected by another rounded corner surface.

In this embodiment, S₁/S₂ may be any point value in 0.05, 0.1, 0.13, 0.15, 0.18, 0.2, 0.23, 0.25, 0.28, 0.3, 0.33, 0.35, 0.38, 0.4, 0.43, 0.45, 0.48, 0.5, 0.53, and 0.55 or a value in a range between any two thereof.

In this embodiment, S₁/S₂≥0.05, so that a total vent area of the N vent mechanisms 3 is large, which helps to improve a venting rate of the cell 10 and improve timeliness of venting of the cell 10. S₁/S₂≤0.55, which is conducive to improving strength of the first wall portion 111.

In some embodiments, 0.15≤S₁/S₂≤0.35.

In this embodiment, S₁/S₂ may be any point value in 0.15, 0.16, 0.17, 0.18, 0.19, 0.2, 0.21, 0.22, 0.23, 0.24, 0.25, 0.26, 0.27, 0.28, 0.29, 0.3, 0.31, 0.32, 0.33, 0.34, and 0.35 or a value in a range between any two thereof.

In some embodiments, the predetermined vent areas of the N vent mechanisms 3 are equal.

Using an example in which two vent mechanisms 3 arranged along the first direction X are arranged on the first wall portion 111, it may be understood that N=2, and predetermined vent areas of the two vent mechanisms 3 are equal.

In this embodiment, predetermined vent areas of the N vent mechanisms 3 are equal, so that vent capabilities of all the vent mechanisms 3 on the first wall portion 111 are substantially consistent, and forming difficulty of the vent mechanisms 3 can be reduced.

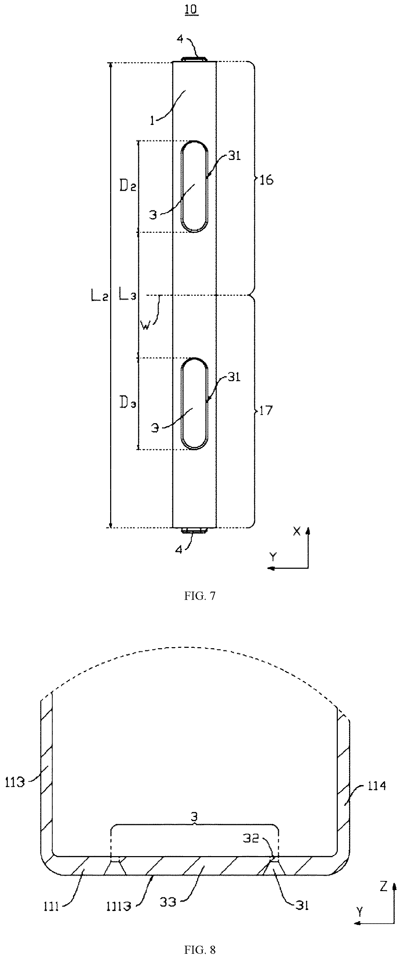

In some embodiments, referring to FIG. 7, FIG. 7 is a view of the cell 10 shown in FIG. 5 taken along a direction A. The can 1 includes a first half region 16 and a second half region 17. Along the first direction X, a portion from a middle cross-section W of the can 1 to one end of the can 1 is the first half region 16, and a portion from the middle cross-section W of the can 1 to an other end of the can 1 is the second half region 17. At least one vent mechanism 3 is arranged on both the first half region 16 and the second half region 17. The first direction X is perpendicular to the middle cross-section W.

Along the first direction X, the can 1 has two opposite end surfaces, distances from the middle cross-section W of the can 1 to the two end surfaces are equal. A part of the can 1 from one end surface to the middle cross-section W is the first half region 16, and a part of the can 1 from the other end surface to the middle cross-section W is the second half region 17. In an embodiment in which the case 11 is a hollow structure having an opening formed at one end along the first direction X, it may be that a surface of the end lid 12 facing the exterior of the can 1 is one end surface of the can 1, and a surface of a wall portion of the case 11 opposite to the end lid 12 facing the exterior of the can 1 is the other end surface of the can 1. In an embodiment in which the case 11 is a hollow structure having openings formed at two opposite ends along the first direction X, it may be that a surface of the end lid 12 facing the exterior of the can 1 is one end surface of the can 1, and a surface of the other end lid 12 facing the exterior of the can 1 is the other end surface of the can 1.

One or more vent mechanisms 3 may be arranged in the first half region 16. One or more vent mechanisms 3 may be arranged in the second half region 17.

During thermal runaway of the cell 10, venting can be performed through the vent mechanism 3 of the first half region 16 and the vent mechanism 3 of the second half region 17, so that a discharge medium that is inside the can 1 and that is located in the first half region 16 may be more rapidly discharged through the vent mechanism 3 of the first half region 16, and a discharge medium in the can 1 that is located in the second half region 17 may be more rapidly discharged through the vent mechanism 3 of the second half region 17, thereby improving the timeliness of venting of the cell 10.

In some embodiments, only two vent mechanisms 3 are arranged on the first wall portion 111, and the two vent mechanisms 3 are respectively located in the first half region 16 and the second half region 17.

It may be understood that, in the two vent mechanisms 3, one vent mechanism 3 is arranged in a part of the first wall portion 111 located in the first half region 16, and the other vent mechanism 3 is arranged in a part of the first wall portion 111 located in the second half region 17.

In this embodiment, only two vent mechanisms 3 are arranged on the first wall portion 111, so that there are not too many vent mechanisms 3 on the first wall portion 111, so that while implementing rapid venting of the cell 10, manufacturing costs of the cell 10 are reduced, thereby achieving better economy.

In some embodiments, still referring to FIG. 7, the vent mechanism 3 is provided with a score groove 31, a length of the can 1 along the first direction X is L₂, and a minimum distance between score grooves 31 of two adjacent vent mechanisms 3 is L₃, L₂>L, and L₃/L₂≥1/6.

Along the first direction X, a maximum distance between end surfaces at two ends of the can 1 is a length of the can 1. If two end surfaces of the can 1 are planar, the length of the can 1 along the first direction X is measured by using the two end surfaces as a reference. If a convex part or a convex part is formed in one or two end surfaces of the can 1, the length of the can 1 along the first direction X is measured by using a planar region of the end surface as a reference. A distance between two positions at which score grooves 31 of two adjacent vent mechanisms 3 are closest is a minimum distance between the score grooves 31 of the two adjacent vent mechanisms 3.

L₃/L₂ may be any point value in 1/6, 1/5, 1/4, 1/3, 1/2, and 2/3 or a value in a range between any two thereof.

In this embodiment, L₃/L₂≥1/6, so that a minimum distance between score grooves of two adjacent vent mechanisms 3 is not too small, so that each vent mechanism 3 can correspond to a larger region of the body portion 21, and each vent mechanism 3 is fully used, thereby improving the timeliness of venting of the cell 10.

In some embodiments, L₃/L₂≥1/4.

In this embodiment, L₃/L₂ may be any point value in 1/4, 1/3, 5/12, 1/2, 7/12, and 2/3 or a value in a range between any two thereof.

In this embodiment, a distance between two adjacent vent mechanisms 3 is further increased. If only two vent mechanisms 3 are arranged on the first wall portion 111, the two vent mechanisms 3 are closer to an end of the case 11 along the first direction X, which is more conducive to rapid discharging of a discharge medium located at two ends of the body portion 21 inside the case 11.

In some embodiments, L₂≥500 mm; and/or L₃≥300 mm.

L₂ may be any point value in 500 mm, 550 mm, 600 mm, 650 mm, 750 mm, and 800 mm or a value in a range between any two thereof. L₃ may be any point value in 300 mm, 330 mm, 350 mm, 380 mm, 400 mm, 430 mm, and 450 mm or a value in a range between any two thereof.

L₂≥500 mm, so that a dimension of the can 1 in the first direction X is large, and can meet a requirement for a large capacity of the cell 10. L₃≥300 mm, so that a minimum distance between two adjacent vent mechanisms 3 is not too small, so that each vent mechanism 3 can correspond to a larger region of the body portion 21, a discharge medium in a larger region of the body portion 21 can be discharged through a corresponding vent mechanism 3, and each vent mechanism 3 is fully used, thereby improving the timeliness of venting of the cell 10.

In some embodiments, reference is still made to FIG. 7. A length of the can 1 along the first direction X is L₂, the vent mechanism 3 is provided with a score groove 31, and a sum of maximum spans of the score grooves 31 of the N vent mechanisms 3 along the first direction X is D₁, 0.2≤D₁/L₂≤0.6.

The maximum span of the score groove 31 along the first direction X is a distance between two farthest positions of the score groove 31 along the first direction X. Maximum spans of the score grooves 31 of the N vent mechanisms 3 on the first wall portion 111 along the first direction X may be equal, or maximum spans of score grooves 31 of at least two vent mechanisms 3 on the first wall portion 111 along the first direction X may be different. The score groove 31 may be a groove extending along a closed track. The closed track may be in a shape of a circle, a rectangle, or the like. Alternatively, the score groove 31 may be a groove along a non-closed track. The non-closed track may be in a shape of a straight line, in a shape of a circular arc, U-shaped, H-shaped, V-shaped, L-shaped, X-shaped, Y-shaped, etc. The score groove 31 may be located on an inner side of the vent mechanism 3 (a side of the vent mechanism 3 facing the body portion 21 along the thickness direction Z of the first wall portion), or may be located on an outer side of the vent mechanism 3 (a side of the vent mechanism 3 facing away from the body portion 21 along the thickness direction Z of the first wall portion). It should be noted that in the plurality of vent mechanisms 3 of the first wall portion 111, score grooves 31 of some vent mechanisms 3 may be located on inner sides of the vent mechanisms 3, and score grooves 31 of other vent mechanisms 3 are located on outer sides of the vent mechanisms 3, or score grooves 31 of all vent mechanisms 3 are located on inner sides of the vent mechanisms 3, or score grooves 31 of all vent mechanisms 3 are located on outer sides of the vent mechanisms 3.

Using an example in which only two vent mechanisms 3 are arranged on the first wall portion 111, a maximum span of a score groove 31 of one vent mechanism 3 along the first direction X is D₂, and a maximum span of a score groove 31 of the other vent mechanism 3 along the first direction X is D₃, D₁=D₂+D₃.

In this embodiment, D₁/L₂ may be any point value in 0.2, 0.23, 0.25, 0.28, 0.3, 0.33, 0.35, 0.38, 0.4, 0.43, 0.45, 0.48, 0.5, 0.53, 0.55, 0.58, and 0.6 or a value in a range between any two thereof.

In this embodiment, D₁/L₂≥0.2, so that a sum of maximum spans of score grooves 31 of a plurality of vent mechanisms 3 on the first wall portion 111 along the first direction X is large, and a total vent area of the plurality of vent mechanisms 3 on the first wall portion 111 can be enlarged, which is conducive to improving the venting rate of the cell 10. D₁/L₂≤0.6, so that a sum of maximum spans of score grooves 31 of a plurality of vent mechanisms 3 on the first wall portion 111 along the first direction X is not too large, which is conducive to improving strength of the first wall portion 111.

In some embodiments, referring to FIG. 8, FIG. 8 is a partial enlarged view of the can 1 shown in FIG. 6. The vent mechanism 3 is provided with a score groove 31. The vent mechanism 3 forms a weak portion 32 in a region in which the score groove 31 is provided. The weak portion 32 is configured to be crackable to release pressure inside the cell 10.

The weak portion 32 is a part having lower strength than another region in the vent mechanism 3. After the score groove 31 is provided on the vent mechanism 3, a remaining part of a region of the vent mechanism 3 corresponding to the score groove 31 is the weak portion 32, and a bottom wall of the score groove 31 may be the weak portion 32. When the cell 10 is in thermal runaway, the vent mechanism 3 may be cracked at the weak portion 32, to release pressure inside the cell 10.

In this embodiment, a weak portion 32 is formed in a region corresponding to a vent mechanism 3 in a manner of providing a score groove 31, so that a manner of forming the weak portion 32 is simple. The weak portion 32 is a weaker region in the vent mechanism 3. The weak portion 32 is more easily damaged during thermal runaway of the cell 10, and vent timely.

In some embodiments, still referring to FIG. 8, along the thickness direction Z of the first wall portion, an opening of the score groove 31 faces away from the body portion 21 (not shown in FIG. 8).

For example, the score groove 31 is provided on an outer side of the vent mechanism 3, so that an opening of the score groove 31 faces the body portion 21.

In this embodiment, an opening of the score groove 31 faces away from the body portion 21. If the vent mechanism 3 is integrally formed with the first wall portion 111, it is convenient to process the score groove 31 in the first wall portion 111. If the vent mechanism 3 is arranged separately from the first wall portion 111, it is convenient to mount the vent mechanism 3 onto the first wall portion 111.

In some other embodiments, along the thickness direction Z of the first wall portion, an opening of the score groove 31 faces the body portion 21.

For example, the score groove 31 is provided on an inner side of the vent mechanism 3, so that an opening of the score groove 31 faces the body portion 21.

In this embodiment, an opening of the score groove 31 faces the body portion 21, so that the weak portion 32 is not easily torn when the first wall portion 111 is deformed due to expansion of the cell 10, thereby improving long-term reliability of the vent mechanism 3.

In some embodiments, the vent mechanism 3 includes a vent region 33. The vent region 33 is configured to open when the weak portion 32 cracks.

The vent region 33 is a part that can be opened after the vent mechanism 3 cracks along the weak portion 32, and the vent region 33 may be arranged along an edge of the weak portion 32. During venting, the vent region 33 may be opened in a flipping or detaching manner. An area of the vent region 33 is a predetermined vent area of the vent mechanism 3.

In this embodiment, the score groove 31 may be a groove extending along a closed track. Alternatively, the score groove 31 may be a groove extending along a non-closed track. The non-closed track may be in a shape of a circular arc, U-shaped, H-shaped, V-shaped, L-shaped, Y-shaped, X-shaped, etc.

In this embodiment, the weak portion 32 defines a vent region 33. During venting, the vent region 33 can be opened with the weak portion 32 as a boundary, thereby increasing the vent area of the vent mechanism 3.

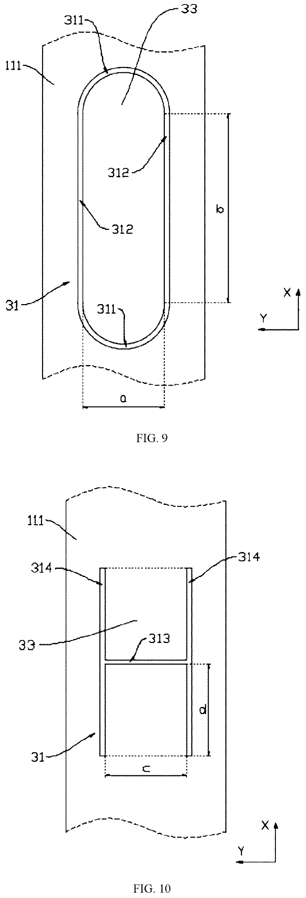

In some embodiments, referring to FIG. 9, FIG. 9 is a partial view of the first wall portion 111 according to some embodiments of this application. The score groove 31 is a groove extending along a closed track, and the score groove 31 is provided around the vent region 33.

It may be understood that the score groove 31 is an annular groove arranged around the vent region 33.

For example, as shown in FIG. 9, the score groove 31 includes two first arc segments 311 and two first straight line segments 312. The two first straight line segments 312 are arranged in parallel. One first arc segment 311, one first straight line segment 312, the other first arc segment 311, and the other first straight line segment 312 are connected in sequence head to tail. Center angles of the two first arc segments 311 are both 180°. An area of the vent region 33 (the predetermined vent area of the vent mechanism 3) is S₁₃, S₁₃=a×b+π×a²/4, where a is a distance between an inner side of one first straight line segment 312 and an inner side of the other first straight line segment 312, b is a length of the first straight line segment 312, and both a and b may be measured on a surface on which an opening of the score groove 31 is located.

In this embodiment, the score groove 31 is a groove extending along a closed track. During venting, after the vent mechanism 3 is cracked along the score groove 31, the vent region 33 may be separated from the first wall portion 111, thereby increasing the vent area, and improving the venting rate of the cell 10.

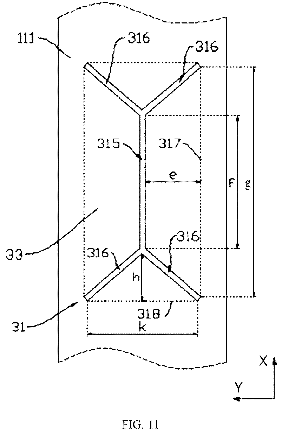

In some embodiments, referring to FIG. 10 and FIG. 11, FIG. 10 is a partial view of the first wall portion 111 according to some other embodiments of this application; and FIG. 11 is a partial view of the first wall portion 111 according to still some other embodiments of this application. The score groove 31 is a groove extending along a non-closed track.

For example, as shown in FIG. 10, the score groove 31 is an H-shaped groove. The score groove 31 includes a second straight line segment 313 and two third straight line segments 314. The two third straight line segments 314 are arranged in parallel. One end of the second straight line segment 313 is connected to a midpoint position of one third straight line segment 314, and the other end of the second straight line segment 313 is connected to a midpoint position of the other third straight line segment 314. An area of the vent region 33 (the predetermined vent area of the vent mechanism 3) is S₁₃, S₁₃=2×c×d, where c is a distance between an inner side of one third straight line segment 314 and an inner side of the other third straight line segment 314, d is a distance between one end of the third straight line segment 314 and a side of the second straight line segment 313 facing the end, and both c and d may be measured on a surface on which an opening of the score groove 31 is located.

For example, as shown in FIG. 11, the score groove 31 is a double Y-shaped groove. The score groove 31 includes a fourth straight line segment 315 and a fifth straight line segment 316. Two fifth straight line segments 316 that are arranged at a non-zero angle are connected to each of two ends of the fourth straight line segment 315. Two fifth straight line segments 316 located at one end of the fourth straight line segment 315 and two fifth straight line segments 316 located at the other end of the fourth straight line segment 315 are symmetrically arranged along a length direction of the fourth straight line segment 315. Two fifth straight line segments 316 located on one side of the fourth straight line segment 315 and two fifth straight line segments 316 located on the other side of the fourth straight line segment 315 are symmetrically arranged along a width direction of the fourth straight line segment 315. Along a length direction of the fourth straight line segment 315, a connection line between free ends of the two fifth straight line segments 316 is a first connection line 317. Along a width direction of the fourth straight line segment 315, a connection line between free ends of the two fifth straight line segments 316 is a second connection line 318. An area of the vent region 33 (the predetermined vent area of the vent mechanism 3) is S₁₃, S₁₃=(f+g)×e+k×h, where f is a length of the fourth straight line segment 315, g is a length of the first connection line 317, e is a distance between the first connection line 317 and a side of the fourth straight line segment 315 facing the first connection line 317, k is a length of the second connection line 318, h is a distance between a connection position between two fifth straight line segments 316 located at one end of the fourth straight line segment 315 facing the second connection line 318 and the second connection line 318, and f, g, e, k, and h may all be measured on a surface on which an opening of the score groove 31 is located.

In some embodiments, still referring to FIG. 6 and FIG. 8, the vent mechanism 3 is integrally formed with the first wall portion 111.

In an embodiment in which the vent mechanism 3 is provided with a score groove 31, the vent mechanism 3 may be formed by the weak portion 32 and the vent region 33. The weak portion 32, the vent region 33, and the first wall portion 111 are integrally formed, so that the vent mechanism 3 and the first wall portion 111 are integrally formed.

For example, the can 1 may include a first wall portion 111, a second wall portion 112, a third wall portion 113, and a fourth wall portion 114. The first wall portion 111 and the second wall portion 112 are oppositely arranged along the thickness direction Z of the first wall portion. The third wall portion 113 and the fourth wall portion 114 are oppositely arranged along the second direction Y. The first wall portion 111, the third wall portion 113, the second wall portion 112, and the fourth wall portion 114 are connected in sequence head to tail. The thickness direction Z of the first wall portion, the first direction X, and the second direction Y are perpendicular to each other. The third wall portion 113 and the fourth wall portion 114 may be wall portions having largest areas on an outer surface of the can 1.

In this embodiment, the vent mechanism 3 is integrally formed with the first wall portion 111, so that the reliability of the vent mechanism 3 is higher, a process of connecting the vent mechanism 3 and the first wall portion 111 is omitted, and production costs of the cell 10 can be reduced.

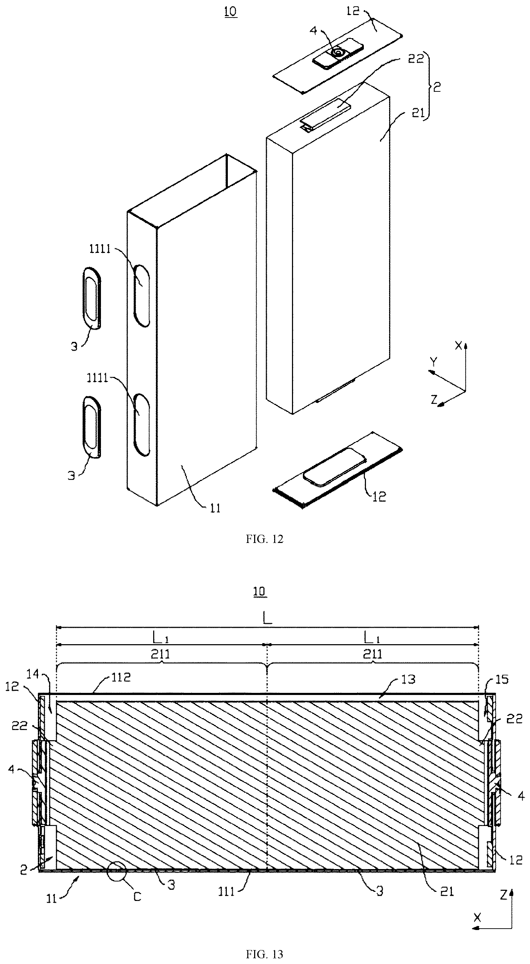

In some embodiments, referring to FIG. 12 and FIG. 13, FIG. 12 is an exploded view of the cell 10 according to some other embodiments of this application; and FIG. 13 is a cross-sectional view of the cell 10 shown in FIG. 12. The vent mechanism 3 is arranged separately from the first wall portion 111, the first wall portion 111 is provided with a vent hole 1111, and the vent mechanism 3 is mounted on the first wall portion 111 and covers the vent hole 1111.

The vent mechanism 3 and the can 1 are two separate components, and the two are separately formed and then mounted together. The vent mechanism 3 may be a component such as explosion-proof disk, an explosion-proof valve, or a safety valve. The vent mechanism 3 may be mounted onto the first wall portion 111 by adhesion, welding, or the like. When the cell 10 is in thermal runaway, the vent mechanism 3 opens at least a part of the vent hole 1111, and a discharge medium inside the cell 10 is discharged through the vent hole 1111, to release pressure inside the cell 10.

The vent mechanism 3 covers the vent hole 1111, the vent mechanism 3 blocks the vent hole 1111, and a projection of a wall surface of the vent hole 1111 along the thickness direction Z of the first wall portion may be entirely located at the vent mechanism 3. The vent mechanism 3 may be located on a side of the vent hole 1111 facing the body portion 21 along the thickness direction Z of the first wall portion, or may be located on a side of the vent hole 1111 facing away from the body portion 21 along the thickness direction Z of the first wall portion. If the vent mechanism 3 is located on a side of the body portion 21 facing the vent hole 1111 along the thickness direction Z of the first wall portion, the vent mechanism 3 isolates the vent hole 1111 from an internal space of the can 1. During thermal runaway of the cell 10, the vent mechanism 3 is damaged, the vent hole 1111 communicates with the internal space of the can 1, and a discharge medium inside the can 1 may be discharged through the vent hole 1111. If the vent mechanism 3 is located on a side of the vent hole 1111 facing away from the body portion 21 along the thickness direction Z of the first wall portion, the vent hole 1111 communicates with an internal space of the can 1, and the vent mechanism 3 isolates the vent hole 1111 from the external space of the can 1. During thermal runaway of the cell 10, the vent mechanism 3 is damaged, the vent hole 1111 communicates the internal space of the can 1 with an external space of the can 1, and a discharge medium inside the can 1 may be discharged through the vent hole 1111.

For example, as shown in FIG. 12 and FIG. 13, the vent mechanism 3 is an explosion-proof disk. The explosion-proof disk is mounted on the first wall portion 111. The explosion-proof disk is a disk having strength in at least some regions less than that of the first wall portion 111. The explosion-proof disk covers the vent hole 1111. During thermal runaway of the cell 10, the explosion-proof disk is at least partially damaged, to open at least a part of the vent hole 1111, thereby releasing pressure inside the cell 10.

In this embodiment, the vent mechanism 3 is a component independent of the can 1. The vent mechanism 3 and the can 1 may be separately produced and assembled, which has low production difficulty and high efficiency.

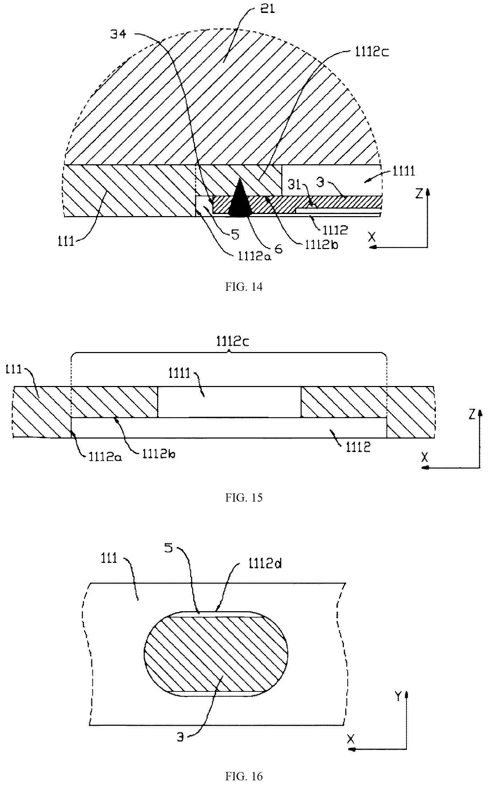

In some embodiments, referring to FIG. 14 and FIG. 15, FIG. 14 is a partial enlarged view of the cell 10 shown in FIG. 13; and FIG. 15 is a cross-sectional view of the first wall portion 111 shown in FIG. 14. The first wall portion 111 is provided with a first groove 1112. The first groove 1112 includes a side surface 1112a and a first bottom surface 1112b. The side surface 1112a is arranged around the first bottom surface 1112b. The vent hole 1111 is provided on the first bottom surface 1112b. The vent mechanism 3 is arranged in the first groove 1112 and abuts against the first bottom surface 1112b. A gap 5 is formed between at least a part of the side surface 1112a along a circumferential direction of the first groove 1112 and the vent mechanism 3.

The first groove 1112 may be formed on the first wall portion 111 in a plurality of manners, for example, stamping and forming, milling and forming, and laser etching and forming. The side surface 1112a is a closed structure extending along a circumferential direction of the first groove 1112. An opening of the first groove 1112 is arranged opposite to the first bottom surface 1112b along a depth direction of the first groove 1112, and the depth direction of the first groove 1112 may be parallel to the thickness direction Z of the first wall portion. The first groove 1112 may be a polygonal groove, a circular groove, or the like. If the first groove 1112 is a polygonal groove, a cross section of the side surface 1112a is a polygon, and the first bottom surface 1112b may be a polygon. If the first groove 1112 is circular, a cross section of the side surface 1112a is circular, and the first bottom surface 1112b may be circular. A cross section of the side surface 1112a is perpendicular to the depth direction of the first groove 1112. The side surface 1112a may include a plurality of side surfaces. The plurality of side surfaces are connected in sequence head to tail along a circumferential direction of the first groove 1112. The side surface may be a surface parallel to the thickness direction Z of the first wall portion, and the side surface may be perpendicular to the first bottom surface 1112b. Alternatively, the side surface may be an inclined surface that is arranged at an obtuse angle with the first bottom surface 1112b. Certainly, the side surface may be a planar surface, or may be an arc surface. If the side surface is an arc surface, the side surface may be an arc surface having a center line parallel to the thickness direction Z of the first wall portion, or may be an arc surface having a center line perpendicular to the thickness direction Z of the first wall portion.

The vent mechanism 3 is arranged in the groove. The vent mechanism 3 may be entirely located inside the first groove 1112, or partially located inside the first groove 1112 and partially outside the first groove 1112. The vent mechanism 3 may be connected to the first wall portion 111 in a plurality of manners, for example, welding and adhesion. The vent mechanism 3 may be directly in contact with the first bottom surface 1112b, so that the vent mechanism 3 directly abuts against the first bottom surface 1112b. Alternatively, the vent mechanism 3 may indirectly abut against the first bottom surface 1112b through an intermediate member. For example, the vent mechanism 3 is welded to a bottom wall 1112c of the first groove 1112, so that the vent mechanism 3 is in contact with a first bottom surface 1112b, and the vent mechanism 3 directly abuts against the first bottom surface 1112b. For another example, the vent mechanism 3 is adhered to the bottom wall 1112c of the first groove 1112 by an adhesive layer, and the vent mechanism 3 indirectly abuts against the first bottom surface 1112b through the adhesive layer.

A circumferential direction of the first groove 1112 surrounds a depth direction of the first groove 1112, and a circumferential direction of an opening of the first groove 1112 is the circumferential direction of the first groove 1112. A gap 5 may be formed between a part of the side surface 1112a along the circumferential direction of the first groove 1112 and the vent mechanism 3, or a gap 5 may be formed between the entire side surface 1112a along the circumferential direction of the first groove 1112 and the vent mechanism 3. The vent mechanism 3 has an outer peripheral surface 34 facing the side surface 1112a, and the outer peripheral surface 34 is a closed structure extending along the circumferential direction of the vent mechanism 3. If a gap 5 is formed between a part of the side surface 1112a along the circumferential direction of the first groove 1112 and the outer peripheral surface 34 of the vent mechanism 3, and no gap 5 is formed between the other part of the side surface 1112a along the circumferential direction of the first groove 1112 and the outer peripheral surface 34 of the vent mechanism 3, the gap 5 is formed between a part of the side surface 1112a along the circumferential direction of the first groove 1112 and the vent mechanism 3, and the gap 5 is a non-closed structure extending along the circumferential direction of the first groove 1112. If a gap 5 is formed between the entire side surface 1112a along the circumferential direction of the first groove 1112 and the outer peripheral surface 34 of the vent mechanism 3, and the gap 5 is formed between the entire side surface 1112a along the circumferential direction of the first groove 1112 and the vent mechanism 3. The gap 5 is a closed structure extending along the circumferential direction of the first groove 1112, that is, the gap 5 is an annular gap.

For example, the vent mechanism 3 is provided with a score groove 31, to correspondingly form a weak portion 32 (not shown in FIG. 14 and FIG. 15).

When the first wall portion 111 is deformed due to expansion of the cell 10, the gap 5 between the vent mechanism 3 and the side surface 1112a may provide a buffer space for the vent mechanism 3, to reduce a risk of deformation of the vent mechanism 3 due to squeezing the vent mechanism 3 by the side surface 1112a, thereby reducing a risk that the vent mechanism 3 is opened in advance during normal use the cell 10, and prolonging a service life of the vent mechanism 3.

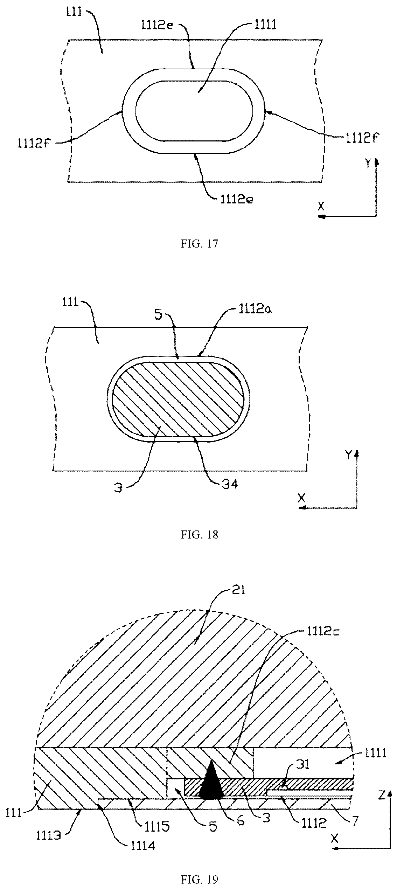

In some embodiments, referring to FIG. 16 and FIG. 17, FIG. 16 is an assembly diagram of the vent mechanism 3 and the first wall portion 111 according to some embodiments of this application; and FIG. 17 is a schematic structural diagram of the first wall portion 111 shown in FIG. 16. The side surface 1112a includes a first region 1112d forming a gap 5 with the vent mechanism 3, a length of the first region 1112d along a circumferential direction of the first groove 1112 is L₄, and a perimeter of the side surface 1112a is L₅, satisfying: 0.2≤L₄/L₅≤1.

A length of the first region 1112d is a total length of a part in which the gap 5 is formed between the side surface 1112a along the circumferential direction of the first groove 1112 and the vent mechanism 3. When the length of the first region 1112d and the perimeter of the side surface 1112a are measured, measurement may be performed along an edge of the side surface 1112a that is located at a position of the opening of the first groove 1112.

L₄/L₅ may be any point value in 0.2, 0.3, 0.4, 0.5, 0.6, 0.7, 0.8, 0.9, and 1 or a value in a range between any two thereof.

For example, the side surface 1112a includes two first side surfaces 1112e and two second side surfaces 1112f. The two first side surfaces 1112e are oppositely arranged along the second direction Y, and the two second side surfaces 1112f are oppositely arranged along the first direction X. One first side surface 1112e, one second side surface 1112f, the other first side surface 1112e, and the other second side surface 1112f are connected in sequence head to tail, to form a closed structure. The first side surface 1112e extends along the first direction X of the first wall portion 111. The second side surface 1112f is in an arc surface. Gaps 5 are formed between the two first side surfaces 1112e and the vent mechanism 3. The gap 5 is formed between only a part of each second side surface 1112f and the vent mechanism 3. It may be understood that, a first region 1112d is formed by parts of the two second side surfaces 1112f forming gaps 5 with the vent mechanism 3 and the two first side surfaces 1112e. Along a circumferential direction of the first groove 1112, a total length of the parts of the two second side surfaces 1112f forming gaps 5 with the vent mechanism 3 and the two first side surfaces 1112e is a length of the first region 1112d, and a total length of the two first side surfaces 1112e and the two second side surfaces 1112f is a perimeter of the side surface 1112a.

In this embodiment, 0.2≤L₄/L₅≤1, a gap 5 is formed between a longer portion of the side surface 1112a in the circumferential direction and the vent mechanism 3, to reduce a range within which the side surface 1112a squeezes the vent mechanism 3 during deformation of the first wall portion 111, and further reduce a risk that the vent mechanism 3 is opened in advance during normal use of the cell 10.

In some embodiments, referring to FIG. 18, FIG. 18 is an assembly diagram of the vent mechanism 3 and the first wall portion 111 according to some other embodiments of this application. A gap 5 is formed between the entire side surface 1112a along a circumferential direction of the first groove 1112 and the vent mechanism 3.

It may be understood that the gap 5 formed between the side surface 1112a and the outer peripheral surface 34 of the vent mechanism 3 is an annular gap extending in the circumferential direction of the first groove 1112. In this embodiment, the first region 1112d is the side surface 1112a, L₄/L₅=1.

In this embodiment, there is a gap 5 between an entire periphery of the side surface 1112a and the vent mechanism 3. The gap 5 is an annular structure surrounding the vent mechanism 3, to further reduce an effect of squeezing the vent mechanism 3 by the side surface 1112a during deformation of the first wall portion 111, and further reduce a risk that the vent mechanism 3 is opened in advance during normal use of the cell 10.

In some embodiments, referring to FIG. 19, FIG. 19 is a partial view of the cell 10 according to some other embodiments of this application. The vent mechanism 3 is connected to the bottom wall 1112c of the first groove 1112 by welding, to form a first weld mark 6.

The bottom wall 1112c of the first groove 1112 is a physical part of the vent mechanism 3 that is located below the first bottom surface 1112b in a depth direction of the first groove 1112 and has a thickness. The first weld mark 6 is a weldment region formed between the vent mechanism 3 and the bottom wall 1112c. The first weld mark 6 may be formed by fusing a part of the vent mechanism 3 and a part of the bottom wall 1112c together. The weld mark may be an annular structure extending along the circumferential direction of the vent mechanism 3, or may be a multi-segment structure arranged at intervals along the circumferential direction of the vent mechanism 3, or may be a long strip-shaped structure extending along a straight line track.

In this embodiment, the vent mechanism 3 is connected to the bottom wall 1112c of the first groove 1112 by welding, so that the vent mechanism 3 is secured to the first wall portion 111, to improve connection strength between the vent mechanism 3 and the first wall portion 111.

In some embodiments, along the thickness direction Z of the first wall portion, a projection of the first weld mark 6 is entirely located on the vent mechanism 3.

Viewed along the thickness direction Z of the first wall portion, the weld mark is entirely located in a region defined by an outer edge of the vent mechanism 3, and there is no part of the weld mark outside the region defined by the outer edge of the vent mechanism 3. The weld mark has a part located at the vent mechanism 3, and also has a part located at the bottom wall 1112c.

In this embodiment, the vent mechanism 3 can be welded to the bottom wall 1112c of the first groove 1112 by penetration welding. The welding manner is simple. The first weld mark 6 formed after the welding may penetrate through the vent mechanism 3 and be embedded into the bottom wall 1112c of the first groove 1112, which can improve the connection strength between the vent mechanism 3 and the first wall portion 111. In addition, because along the thickness direction Z of the first wall portion, a projection of the first weld mark 6 is located on the vent mechanism 3, the first weld mark 6 does not protrude from an edge of the vent mechanism 3, so that the first weld mark 6 is not located in the gap 5 between the vent mechanism 3 and the side surface 1112a, thereby reducing a risk that the side surface 1112a presses the vent mechanism 3 by using the first weld mark 6 when the first wall portion 111 is deformed.

In some embodiments, still referring to FIG. 19, along the thickness direction Z of the first wall portion, the vent mechanism 3 is located on a side of the vent hole 1111 facing away from the body portion 21.

It may be understood that, along the thickness direction Z of the first wall portion, the vent mechanism 3 is located on a side of the vent hole 1111 facing away from the interior of the can 1. The side of the vent hole 1111 facing away from the interior of the can 1 is a side of the vent hole 1111 facing the exterior of the can 1.

In this embodiment, the vent mechanism 3 is located on a side of the vent hole 1111 facing away from the body portion 21. The vent mechanism 3 may be mounted on an outer side of the first wall portion 111, so that the vent mechanism 3 is mounted more conveniently.

In some embodiments, the cell 10 further includes a guard 7. Along the thickness direction Z of the first wall portion, the guard 7 is located on the side of the vent mechanism 3 facing away from the body portion 21, and the guard 7 covers the first groove 1112.

Along the thickness direction Z of the first wall portion, the side of the vent mechanism 3 facing away from the body portion 21 is an outer side of the vent mechanism 3. The guard 7 covers the first groove 1112, so that an opening of the first groove 1112 is blocked by the guard 7. Along the thickness direction Z of the first wall portion, a projection of the opening of the first groove 1112 is entirely located on the guard 7. The guard 7 may be a flat plate structure. The guard 7 can be made of a metal material, such as copper, iron, aluminum, steel, or an aluminum alloy. The guard 7 may also be made of a non-metallic material such as plastic or rubber. The guard 7 is secured to the first wall portion 111, and the guard 7 may be secured to the first wall portion 111 by welding or adhesion.

In this embodiment, the guard 7 can protect the vent mechanism 3, to reduce a risk that an external material (impurities or an electrolytic solution) enters the first groove 1112 and erodes the vent mechanism 3.

In some embodiments, along the thickness direction Z of the first wall portion, the first wall portion 111 has a first outer surface 1113 facing away from the body portion 21. The first outer surface 1113 is provided with a second groove 1114. The first groove 1112 is provided on a bottom surface of the second groove 1114. The guard 7 is at least partially accommodated in the second groove 1114.

The first outer surface 1113 of the first wall portion 111 may be a surface of the first wall portion 111 farthest away from the body portion 21 along the thickness direction. The bottom surface of the second groove 1114 may be a first surface 1115. The first groove 1112 is provided on the first surface 1115, and the guard 7 may abut against the first surface 1115, so that the guard 7 covers the first groove 1112. The second groove 1114 may be a polygonal groove, a circular groove, or the like. The guard 7 may be partially accommodated in the second groove 1114, or may be entirely located in the second groove 1114.

In this embodiment, the first wall portion 111 is provided with a second groove 1114, and the guard 7 is at least partially located in the second groove 1114. A height of the guard 7 protruding from the first outer surface 1113 of the first wall portion 111 can be reduced, to reduce the space outside the can 1 occupied by the guard 7.

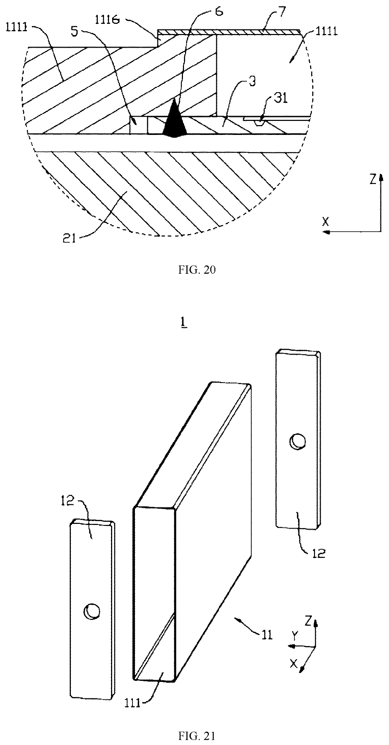

In some embodiments, referring to FIG. 20, FIG. 20 is a partial view of the cell 10 according to still some other embodiments of this application. Along the thickness direction Z of the first wall portion, the vent mechanism 3 is located on a side of the vent hole 1111 facing the body portion 21.

It may be understood that the vent mechanism 3 is located on a side of the vent hole 1111 facing the interior of the can 1.

In this embodiment, the vent mechanism 3 is located on a side of the vent hole 1111 facing the body portion 21. In this way, the vent mechanism 3 can be mounted on an inner side of the first wall portion 111, and the first wall portion 111 can protect the vent mechanism 3, thereby reducing a risk that the first wall portion 111 is damaged by an external component.

In some embodiments, the cell 10 further includes a guard 7. Along the thickness direction Z of the first wall portion, the guard 7 is located on a side of the vent hole 1111 facing away from the body portion 21 and covers the vent hole 1111.

Along the thickness direction Z of the first wall portion, a side of the vent hole 1111 facing away from the body portion 21 is a side of the vent hole 1111 facing the exterior of the can 1. Along the thickness direction Z of the first wall portion, the vent mechanism 3 and the guard 7 are respectively located on two sides of the vent hole 1111, the vent mechanism 3 is located on a side of the vent hole 1111 facing the interior of the can 1, and the guard 7 is located at a side of the vent hole 1111 facing away from the interior of the can 1.

The guard 7 covers the vent hole 1111, the guard 7 blocks the vent hole 1111, and a projection of a wall surface of the vent hole 1111 along the thickness direction Z of the first wall portion may be entirely located at the guard 7.

For example, along the thickness direction Z of the first wall portion, a protrusion 1116 arranged around the vent hole 1111 is formed on a side of the first wall portion 111 facing away from the electrode assembly 2, and the guard 7 is secured to the protrusion 1116 to cover the vent hole 1111.

In this embodiment, the guard 7 can protect the vent mechanism 3, to reduce a risk that an external material (impurities or an electrolytic solution) enters the vent hole 1111 and erodes the vent mechanism 3.

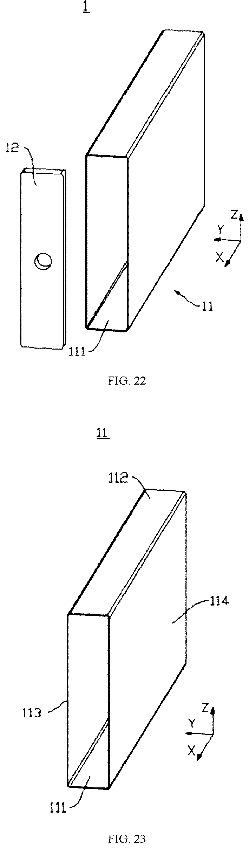

In some embodiments, referring to FIG. 21 and FIG. 22, FIG. 21 is an exploded view of the can 1 according to some embodiments of this application; and FIG. 22 is an exploded view of the can 1 according to some other embodiments of this application. The can 1 includes a case 11 and an end lid 12. The case 11 has an opening formed at at least one end along the first direction X. The case 11 includes the first wall portion 111. The end lid 12 is in a one-to-one correspondence with the opening, and the end lid 12 closes the opening.

The first wall portion 111 is formed in the case 11, and the first wall portion 111 is at least a part of the case 11. The case 11 may be in a shape of a cylinder, a polygonal prism, or the like. In an embodiment in which the case 11 is in a shape of a cylinder, a cylindrical side wall of the case 11 may entirely be used as the first wall portion 111. In an embodiment in which the case 11 is in a shape of a polygonal prism, one wall portion in the case 11 may be the first wall portion 111. For example, in FIG. 21 and FIG. 22, the case 11 is in a shape of a cuboid, and one wall portion in the case 11 is the first wall portion 111.

In an embodiment shown in FIG. 21, the case 11 is a hollow structure having openings formed at two ends along the first direction X. In an embodiment shown in FIG. 22, the case 11 is a hollow structure having an opening formed at one end along the first direction X.

During assembly of the cell 10, the electrode assembly 2 may be first mounted into the case 11, and then the opening of the case 11 is closed by the end lid 12, so that the cell 10 is assembled conveniently and quickly. Because the first wall portion 111 is formed in the case 11, the vent mechanism 3 is located on the case 11, and a discharge medium discharged when the cell 10 is vented through the vent mechanism 3 affects a component outside the end lid 12. The component may be a busbar component, a detection component, or the like that is electrically connected to the electrode terminal 4 on the end lid 12.

In some embodiments, still referring to FIG. 21, openings are formed at both opposite ends of the case 11 along the first direction X.

It may be understood that there are two end lids 12 in the can 1, and the two end lids 12 respectively close two openings of the case 11.

For example, along the first direction X, tabs 22 (not shown in FIG. 21) are arranged at both ends of the body portion 21 (not shown in FIG. 21), and the tabs 22 at the two ends of the body portion 21 are opposite in polarity. Electrode terminals 4 (not shown in FIG. 21) are arranged at both end lids 12 of the can 1. Along the first direction X, an electrode terminal 4 at one end lid 12 of the can 1 is electrically connected to a tab 22 at one end of the body portion 21, and an electrode terminal 4 at the other end lid 12 of the can 1 is electrically connected to a tab 22 at the other end of the body portion 21.

In this embodiment, openings are formed at both opposite ends of the case 11 along the first direction X. During assembly of the cell 10, the electrode assembly 2 can enter the case 11 from any end of the case 11, which can effectively improve assembly efficiency of the cell 10.

In some embodiments, referring to FIG. 23, FIG. 23 is a schematic structural diagram of the case 11 shown in FIG. 21. The case 11 is an integrally formed structure.

For example, the can 1 may include a first wall portion 111, a second wall portion 112, a third wall portion 113, and a fourth wall portion 114. The first wall portion 111 and the second wall portion 112 are oppositely arranged along the thickness direction Z of the first wall portion. The third wall portion 113 and the fourth wall portion 114 are oppositely arranged along the second direction Y. The first wall portion 111, the third wall portion 113, the second wall portion 112, and the fourth wall portion 114 are connected in sequence head to tail. The thickness direction Z of the first wall portion, the first direction X, and the second direction Y are perpendicular to each other. The first wall portion 111, the second wall portion 112, the third wall portion 113, and the fourth wall portion 114 are integrally formed. The can 1 may be formed from a plate by stamping or stretching.

In this embodiment, the case 11 is an integrally formed structure. In this way, the strength of the case 11 can be improved, an anti-destruction capability of the case 11 can be improved, and a service life of the case 11 can be prolonged.

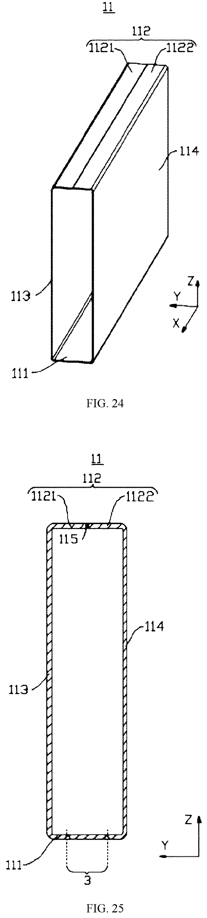

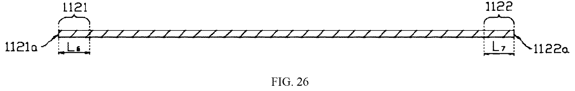

In some embodiments, referring to FIG. 24 to FIG. 26, FIG. 24 is a schematic structural diagram of the case 11 according to some other embodiments of this application; FIG. 25 is a cross-sectional view of the case 11 shown in FIG. 24 taken along a YZ plane; and FIG. 26 is an expanded view of the case 11 shown in FIG. 25. The case 11 is formed by bending a plate, and two, head and tail ends of the plate are connected to each other along a circumferential direction of an opening of the case 11.

Using an example in which the case 11 includes a first wall portion 111, a third wall portion 113, a second wall portion 112, and a fourth wall portion 114, the first wall portion 111, the third wall portion 113, the second wall portion 112, and the fourth wall portion 114 are sequentially arranged along the circumferential direction of the opening.

Two ends, the head and tail, of the plate along the circumferential direction of the opening are respectively a first end 1121 and a second end 1122. As shown in FIG. 26, before the case 11 is formed, the plate has two opposite end surfaces. The two end surfaces are respectively a first end surface 1121a and a second end surface 1122a. A part in a region of the plate that is offset by a first preset distance L₆ from the first end surface 1121a along a direction close to the second end surface 1122a is the first end 1121 of the plate, and a length of the first end 1121 is equal to the first preset distance L₆. A part in a region of the plate that is offset by a second preset distance L₇ from the second end surface 1122a along a direction close to the first end surface 1121 a is the second end 1122 of the plate, and a length of the second end 1122 is equal to the second preset distance L₇. The first preset distance L₆ may be equal to or different from the second preset distance L₇.

The two ends (the first end 1121 and the second end 1122) of the plate may be connected in a plurality of manners, for example, welding, adhesion, and hot fusion connection. A connection position between the two ends may be located on one wall portion of the case 11. For example, the connection position between the two ends is located on the first wall portion 111, the second wall portion 112, the third wall portion 113, or the fourth wall portion 114. The connection position between the two ends may also be located at an intersection position of two adjacent wall portions of the case 11, and the intersection position is a corner region of the case 11.

During forming of the case 11, the plate only needs to be bent, and two, head and tail ends of the plate are connected to each other. A forming manner of the case 11 is simple, so that difficulty in forming the case 11 can be effectively reduced.

In some embodiments, two ends of the plate are connected by welding and form a second weld mark 115*.*

The second weld mark 115 is formed at a weldment position between the two ends, and the second weld mark 115 may be a part in which the two ends are fused together. If the first end surface 1121a and the second end surface 1122a are oppositely arranged, the two ends may be welded by saddle welding. If an overlapping region is formed between the two ends along the thickness direction Z of the first wall portion, welding can be performed in the overlapping region by penetration welding.

In this embodiment, the two ends of the plate are connected by welding, so that the two ends have good connection strength, and the two ends are more secure after being connected.

In some embodiments, the case 11 further includes a second wall portion 112. The first wall portion 111 is arranged opposite to the second wall portion 112 along the thickness direction Z of the first wall portion. The second weld mark 115 is located on the second wall portion 112.

As an example, two, head and tail ends of the panel jointly form the second wall portion 112. To be specific, one part of the second wall portion 112 is the first end 1121, and the other part of the second wall portion 112 is the second end 1122.

In this embodiment, the second weld mark 115 is located on the second wall portion 112, so that the second weld mark 115 and the vent mechanism 3 are located on two opposite wall portions of the case 11, thereby reducing impact of the two ends of the plate on the vent mechanism 3 when the two ends of the plate are welded, and improving reliability of the vent mechanism 3. In an embodiment in which the third wall portion 113 and the fourth wall portion 114 are wall portions having largest areas on an outer surface of the can 1. During expansion of the electrode assembly 2, impact of the electrode assembly 2 on the first wall portion 111 and the second wall portion 112 is less than impact of the electrode assembly 2 on the third wall portion 113 and the fourth wall portion 114. Deformation amounts of the first wall portion 111 and the second wall portion 112 are less than deformation amounts of the third wall portion 113 and the fourth wall portion 114. Because the second weld mark 115 is located on the second wall portion 112, impact of expansion of the electrode assembly 2 on the second weld mark 115 can be reduced, and a risk that the case 11 is damaged at a position of the second weld mark 115 due to expansion of the electrode assembly 2 can be reduced.

In some embodiments, the can 1 is in a cuboid shape, and the first direction X is parallel to a length direction of the can 1.

For example, the length of the can 1 is greater than or equal to a height and a width of the can 1.

In this embodiment, the can 1 is in a cuboid shape. The can 1 has a simple structure and is easy to be formed. When the cell 10 is used in a battery 100, the can 1 of the cell 10 is in a cuboid shape, which can reduce a mounting gap between cells 10, and helps increase a volume energy density of the battery 100.

Embodiments of this application provide a battery 100, and the cell 10 provided in any one of the foregoing embodiments.

Embodiments of this application provide an electric device, and the cell 10 provided in any one of the foregoing embodiments. The cell 10 is configured to provide electric energy for the electric device.

Embodiments of this application further provide a cell 10, including a can 1 and an electrode assembly 2. The electrode assembly 2 is accommodated in the can 1. The can 1 is a cuboid. The can 1 includes a case 11 and two end lids 12. Along a first direction X, openings are formed at both opposite ends of the case 11. Each end lid 12 closes one opening. The case 11 includes a first wall portion 111, a second wall portion 112, a third wall portion 113, and a fourth wall portion 114. The first wall portion 111, the third wall portion 113, the second wall portion 112, and the fourth wall portion 114 are connected in sequence head to tail. The first wall portion 111 and the second wall portion 112 are oppositely arranged along a thickness direction Z of the first wall portion. The third wall portion 113 and the fourth wall portion 114 are oppositely arranged along a second direction Y. The thickness direction Z of the first wall portion intersects with the first direction X, and a plane formed by intersecting the thickness direction Z of the first wall portion with the first direction X intersects with the second direction Y. The electrode assembly 2 includes a body portion 21 and a tab 22. Along the first direction X, tabs 22 are arranged at both opposite ends of the body portion 21. Electrode terminals 4 is arranged on both end lids 12. A tab 22 at one end of the body portion 21 is electrically connected to an electrode terminal 4 on one end lid 12, and a tab 22 at the other end of the body portion 21 is electrically connected to an electrode terminal 4 on the other end lid 12. The first wall portion 111 supports the body portion 21 along the gravity direction. A channel gap 13 is formed between the second wall portion 112 and the body portion 21. The channel gap 13 is configured for communicating with spaces that are inside the can 1 and that are located at two ends of the body portion 21 along the first direction X. A thickness of the first wall portion 111 and a thickness of the second wall portion 112 are equal. A thickness of the third wall portion 113 and a thickness of the fourth wall portion 114 are both less than the thickness of the first wall portion 111. N vent mechanisms 3 arranged along the first direction X are arranged on the first wall portion 111. The body portion 21 includes a plurality of sub-regions 211. The plurality of sub-regions 211 are consecutively arranged along the first direction X. A length of the body portion 21 is L, and a length of the sub-region 211 is L₁, L=L₁×N, L≥400 mm, and N≥2. A projection of each vent mechanism 3 along a thickness direction Z of the first wall portion is correspondingly located in one of the sub-regions 211. A sum of predetermined vent areas of the N vent mechanisms 3 is S₁, the predetermined vent areas of the N vent mechanisms 3 are equal, and the first wall portion 111 has, along the thickness direction Z of the first wall portion, a first outer surface 1113 facing away from the body portion 21. An area of the first outer surface 1113 is S₂, 0.05≤S₁/S₂≤0.55.

It should be noted that the embodiments in this application and features in the embodiments may be mutually combined in a case that no conflict occurs.

The foregoing embodiments are merely illustrative of the technical solutions of this application, and not intended to limit this application. For a person skilled in the art, this application may have various modifications and changes. Any modification, equivalent replacement, or improvement made without departing from the spirit and principle of this application shall fall within the protection scope of this application.

## Claims

1. A cell, comprising:
a can, comprising a first wall portion, wherein N vent mechanisms are arranged along a first direction on the first wall portion; and
an electrode assembly, accommodated in the can, wherein the electrode assembly comprises a body portion and a tab, the tab being arranged at at least one end of the body portion, and the body portion comprising a plurality of sub-regions, the plurality of sub-regions being consecutively arranged along the first direction, a length of the body portion being L, and a length of the sub-region being L₁, L=L₁×N, L≥400 mm, and N≥2, wherein
a projection of each vent mechanism along a thickness direction of the first wall portion is correspondingly located in one of the sub-regions, and the thickness direction of the first wall portion intersects with the first direction.

2. The cell according to claim 1, wherein the first wall portion supports the body portion along a gravity direction.

3. The cell according to claim 2, wherein the can further comprises a second wall portion, the first wall portion being arranged opposite to the second wall portion along the thickness direction of the first wall portion, a channel gap being formed between the second wall portion and the body portion, and the channel gap being configured for communicating with spaces that are inside the can and that are located at two ends of the body portion along the first direction.

4. The cell according to any one of claims 1 to 3, wherein the can further comprises a third wall portion and a fourth wall portion, the third wall portion and the fourth wall portion being oppositely arranged along a second direction, the first wall portion connecting the third wall portion and the fourth wall portion, and a plane formed by intersecting the thickness direction of the first wall portion with the first direction intersecting with the second direction, wherein
a thickness of the third wall portion and a thickness of the fourth wall portion are both less than a thickness of the first wall portion.

5. The cell according to any one of claims 1 to 4, wherein a sum of predetermined vent areas of the N vent mechanisms is S₁, and the first wall portion has, along the thickness direction of the first wall portion, a first outer surface facing away from the body portion, an area of the first outer surface being S₂, 0.05≤S₁/S₂≤0.55.

6. The cell according to claim 5, wherein 0.15≤S₁/S₂≤0.35.

7. The cell according to claim 5 or 6, wherein the predetermined vent areas of the N vent mechanisms are equal.

8. The cell according to any one of claims 1 to 7, wherein the can comprises a first half region and a second half region, along the first direction, a portion from a middle cross-section of the can to one end of the can being the first half region, and a portion from the middle cross-section of the can to an other end of the can being the second half region, at least one vent mechanism being arranged on both the first half region and the second half region, the first direction being perpendicular to the middle cross-section.

9. The cell according to claim 8, wherein only two vent mechanisms are arranged on the first wall portion, and the two vent mechanisms are respectively located in the first half region and the second half region.

10. The cell according to any one of claims 1 to 9, wherein the vent mechanism is provided with a score groove, a length of the can along the first direction is L₂, and a minimum distance between score grooves of two adjacent vent mechanisms is L₃, L₂>L, and L₃/L₂≥1/6.

11. The cell according to claim 10, wherein L₃/L₂≥1/4.

12. The cell according to claim 10 or 11, wherein L₂≥500 mm; and/or L₃≥300 mm.

13. The cell according to any one of claims 1 to 12, wherein a length of the can along the first direction is L₂, the vent mechanism is provided with a score groove, and a sum of maximum spans of the score grooves of the N vent mechanisms along the first direction is D₁, 0.2≤D₁/L₂≤0.6.

14. The cell according to any one of claims 1 to 13, wherein the vent mechanism is provided with a score groove, the vent mechanism forming a weak portion in a region in which the score groove is provided, the weak portion being configured to be crackable to release pressure inside the cell.

15. The cell according to claim 14, wherein along the thickness direction of the first wall portion, an opening of the score groove faces the body portion.

16. The cell according to claim 14 or 15, wherein the vent mechanism comprises a vent region, the vent region being configured to open when the weak portion cracks.

17. The cell according to claim 16, wherein the score groove is a groove extending along a closed track, and the score groove is provided around the vent region.

18. The cell according to any one of claims 1 to 17, wherein the vent mechanism is integrally formed with the first wall portion.

19. The cell according to any one of claims 1 to 17, wherein the vent mechanism is arranged separately from the first wall portion, the first wall portion is provided with a vent hole, and the vent mechanism is mounted on the first wall portion and covers the vent hole.

20. The cell according to claim 19, wherein the first wall portion is provided with a first groove, the first groove comprising a side surface and a first bottom surface, the side surface being arranged around the first bottom surface, the vent hole being provided on the first bottom surface, and the vent mechanism being arranged in the first groove and abutting against the first bottom surface, wherein
a gap is formed between at least a part of the side surface along a circumferential direction of the first groove and the vent mechanism.

21. The cell according to claim 20, wherein the side surface comprises a first region forming a gap with the vent mechanism, a length of the first region along a circumferential direction of the first groove is L₄, and a perimeter of the side surface is L₅, satisfying: 0.2≤L₄/L₅≤1.

22. The cell according to claim 20 or 21, wherein a gap is formed between the entire side surface along a circumferential direction of the first groove and the vent mechanism.

23. The cell according to any one of claims 20 to 22, wherein the vent mechanism is connected to the bottom wall of the first groove by welding, to form a first weld mark.

24. The cell according to claim 23, wherein along the thickness direction of the first wall portion, a projection of the first weld mark is entirely located on the vent mechanism.

25. The cell according to any one of claims 20 to 24, wherein along the thickness direction of the first wall portion, the vent mechanism is located on a side of the vent hole facing away from the body portion.

26. The cell according to claim 25, wherein the cell further comprises a guard, wherein along the thickness direction of the first wall portion, the guard is located on the side of the vent mechanism facing away from the body portion, and the guard covers the first groove.

27. The cell according to claim 26, wherein along the thickness direction of the first wall portion, the first wall portion has a first outer surface facing away from the body portion, the first outer surface being provided with a second groove, the first groove being provided on a bottom surface of the second groove, the guard being at least partially accommodated in the second groove.

28. The cell according to any one of claims 20 to 24, wherein along the thickness direction of the first wall portion, the vent mechanism is located on a side of the vent hole facing the body portion.

29. The cell according to claim 28, wherein the cell further comprises a guard, wherein along the thickness direction of the first wall portion, the guard is located on a side of the vent hole facing away from the body portion and covers the vent hole.

30. The cell according to any one of claims 1 to 29, wherein the can comprises:
a case, having an opening formed at at least one end along the first direction, the case comprising the first wall portion; and
an end lid, in a one-to-one correspondence with the opening, the end lid closing the opening.

31. The cell according to claim 30, wherein the opening is formed at both opposite ends of the case along the first direction.

32. The cell according to claim 30 or 31, wherein the case is an integrally formed structure.

33. The cell according to claim 30 or 31, wherein the case is formed by bending a plate, and two, head and tail ends of the plate are connected to each other along a circumferential direction of the opening.

34. The cell according to claim 33, wherein the two ends are connected by welding to form a second weld mark.

35. The cell according to claim 34, wherein the case further comprises a second wall portion, wherein the first wall portion is arranged opposite to the second wall portion along the thickness direction of the first wall portion, wherein
the second weld mark is located on the second wall portion.

36. The cell according to any one of claims 1 to 35, wherein the can is in a cuboid shape, and the first direction is parallel to a length direction of the can.

37. A battery, comprising the cell according to any one of claims 1 to 36.

38. An electric device, comprising the cell according to any one of claims 1 to 36, the cell being configured to provide electric energy for the electric device.
